# EUROPEAN PATENT SPECIFICATION

(11) **EP 4 341 761 B1**
(45) Date of publication and mention of the grant of the patent: **01.07.2026**
(21) Application number: 22805171.0
(22) Date of filing: 04.05.2022
(51) Int. Cl.: G05D 1/00, B60W 30/10, B60W 50/00, B60W 60/00, G08G 1/01

(54) **VEHICLE TRAJECTORY DETERMINATION**
BESTIMMUNG DER FAHRZEUGTRAJEKTORIE
DÉTERMINATION DE TRAJECTOIRE DE VÉHICULE

(30) Priority: 21.05.2021 US 202117327350
(43) Date of publication of application: 27.03.2024
(60) Divisional application: 26178531.5
(73) Proprietor: Zoox, Inc., Foster City, CA 94404 (US)
(72) Inventor: CALDWELL, Timothy, Foster City, CA 94404 (US); HUDECEK, Janek, Foster City, CA 94404 (US); LAURENSE, Vincent, Andreas, Foster City, CA 94404 (US); RILEY, Jack, Foster City, CA 94404 (US)
(74) Representative: Morrall, Jonathan Ian McLachlan
(86) International application number: PCT/US2022/027674
(87) International publication number: WO 2022/245544

(56) References cited:
- EP-A1- 3 421 313
- WO-A1-2020/089311
- WO-A1-2020/092500
- JP-A- 2007 263 831
- US-A1- 2017 183 004
- US-A1- 2017 183 004
- US-A1- 2019 186 948
- US-A1- 2019 186 948

## Description

### CROSS REFERENCE TO RELATED APPLICATIONS

This invention claims priority to U.S. Patent Application No. 17/327,350, filed May 21, 2021, titled "VEHICLE TRAJECTORY DETERMINATION".

### BACKGROUND

Vehicles may be equipped with control systems for determining trajectories for the vehicles to follow, such as based on a planned path of a vehicle through an environment. These control systems often correct for discrepancies between a planned path of a vehicle and a physical position of the vehicle. For example, the control system may determine a trajectory for the vehicle to follow by estimating a future state of the vehicle and merging positional- and velocity-based trajectories associated with the estimated future state. However, estimating the future state and merging trajectories associated with the estimated future state may introduce noise an error into the trajectory calculations, which can result in irregular or sporadic changes in direction of the vehicle.

US 2017/183004 A1 discloses a driver assistance system for collision avoidance which includes an environmental sensor for detecting an obstacle on an anticipated trajectory of a vehicle. A computing unit searches for a first evasion trajectory on which the obstacle is collision-free and for a second evasion trajectory which is transmitted from the probable trajectory and on which the obstacle can be traversed without collision.

US 2019/186948 A1 discloses a method which includes accessing information stored for positions along a road and using the accessed information to identify an expected trajectory for a vehicle.

### SUMMARY

The invention is defined by the independent claims. Further advantageous embodiments are set out in the depended claims.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical components or features.
FIG. 1 is an illustration of a vehicle operating in an environment and implementing a vehicle control system, in accordance with examples of this disclosure.
FIG. 2 illustrates a process for determining a vehicle trajectory, in accordance with examples of this disclosure.
FIG. 3 is block diagram of an example system for implementing the techniques described herein.
FIG. 4 depicts an example process for determining a vehicle trajectory associated with vehicle operation in an environment, in accordance with examples of this disclosure.
FIG. 5 depicts an example process for determining a trajectory for a vehicle to follow at a future time based on a vehicle action associated with vehicular operations in an environment, in accordance with examples of this disclosure.
FIG. 6 depicts an example process for sending a control signal associated with a vehicle trajectory based on an actuation delay associated with a corresponding vehicle component, in accordance with examples of this disclosure.

### DETAILED DESCRIPTION

As discussed above, a vehicle control system may determine a trajectory for a vehicle to follow based on an estimated future state of the vehicle, and positional and velocity-based trajectories associated with the estimated future state. However, noise and error introduced by determining the estimated future state and the velocities associated therewith may result in irregular or sporadic changes in direction of the vehicle. Therefore, current implementations may be insufficient to provide continuous signals to effectively track (e.g., follow) a planned trajectory, while maintaining a smooth ride for passengers. This application relates to techniques for improving the vehicle control systems in order to provide and maintain a continuous trajectory to efficiently and effectively track a planned path.

In some examples, a vehicle may be configured to traverse a planned path in an environment. Such a path may be a geometric set of positions for the vehicle to follow while traversing from an origin to destination, or any portion thereof. The vehicle may include a control system configured to control the vehicle through the environment based in part on the planned path. In some examples, the control system may include a planner component. In various examples, the planner component may be configured to determine a planned trajectory for the vehicle to follow. In some examples, the planned trajectory may account for one or more deviations from a pre-determined route associated with a vehicle trip, such as deviations taken in response to an object (e.g., another vehicle, a pedestrian, a bicyclist, etc.). In various examples, the planner component may be configured to determine and/or alter trajectories for the vehicle to follow when traveling according to the planned path. In various examples, the planner component may be configured to determine trajectories for the vehicle to follow at a pre-determined interval, such as every 0.1 seconds, 0.05 seconds, or the like. As used herein, the term planned trajectory may be used to describe a previously determined trajectory (e.g., a trajectory determined at a previous time interval). For example, the planner component may determine, at pre-determined time intervals, a new trajectory for the vehicle to follow based at least in part on a previous trajectory. The planner component may, at each time interval, pass the new trajectory to a tracker component of the control system.

In various examples, the tracker component may be configured to determine one or more control signals to send to a drive system to control the vehicle according to the new trajectory. In various examples, the control signal(s) may include instructions to modify settings associated with one or more components of a drive system of the vehicle (e.g., motor, engine, transmission, steering components, braking components, etc.). As a non-limiting example, the tracker may inform a particular current to supply to one or more motor controllers to cause a certain torque to be applied to one or more wheels (and, in turn, a desired acceleration or velocity of the vehicle). In such examples, the tracker component may be configured to cause the vehicle to be controlled according to the new trajectory. As discussed herein, the vehicle control system may be associated with a vehicle computing system.

In some examples, the vehicle computing system may determine a location of the vehicle, such as based on sensor data from one or more sensors of the vehicle and/or one or more remote sensors (e.g., sensors associated with other vehicles, sensors mounted in an environment, etc.). Sensor data may include data associated with a current state of the vehicle, e.g., a velocity, an acceleration, a position, and/or an orientation of the vehicle. The location of the vehicle may include a current, physical location of a vehicle operating in the environment, such as according to a planned trajectory of the vehicle. In some examples, the vehicle computing system may determine whether the current location of the vehicle is within a threshold distance (e.g., 10 centimeters, 7 inches, etc.) laterally of the planned trajectory. In such examples, the threshold distance may represent a safety constraint to ensure that the vehicle operates within a pre-determined safety parameter. As such, the techniques described herein may improve the safe operation of the vehicle.

Based on a determination that the current location is not within the threshold distance of the planned trajectory, the vehicle computing system may determine to cease further operation of the vehicle in the environment. In some examples, the vehicle computing system may determine a trajectory for the vehicle to follow such that the vehicle stops in a safe location. In such examples, the vehicle computing system may be configured to identify the safe location and cause the vehicle to traverse the environment to the safe location. In some examples, the vehicle computing system may be configured to connect to a remote operator, such as to receive control inputs from the remote operator.

Based on a determination that the current location is within the threshold distance of the planned trajectory, the vehicle computing system may determine an estimated location of the vehicle at a time in the future. In such examples, the estimated location of the vehicle can include a projection of the vehicle location at the future time (e.g., as if the vehicle had perfectly followed the previously determined trajectory given the current state estimates of the vehicle). In some examples, the time may be determined based on a pre-determined rate for calculating vehicle trajectories (e.g., every 10 milliseconds, every 50 milliseconds, etc.). Additionally, or in the alternative, in some examples, the future time associated with the estimated location may be determined based on a delay associated with a drive system component. The delay associated with the drive system component includes a delay in actuating the drive system component based on the control signal and may also include a delay in determining a control signal to send to the drive system component (e.g., a latency). For example, a braking system of the vehicle may have associated therewith a first time delay between receiving a control signal and engaging the brakes based on the signal. The vehicle computing system may determine the future time associated with the estimated location based on the first time delay. In some examples, the delay associated with the drive system component may include an average delay associated with two or more drive system components. In such examples, the vehicle computing system may determine the future time associated with the estimated location based at least in part on the average delay associated with actuating the two or more components of the drive system.

The estimated location of the vehicle may include a longitudinal coordinate and a lateral coordinate. In various examples, the vehicle computing system may determine a longitudinal coordinate of the estimated location of the vehicle based at least in part on a previously determined trajectory. For example, the vehicle computing system may determine the longitudinal coordinate based on how far the vehicle is estimated to travel during a time interval between a current time and the future time, while traveling at one or more speeds associated with the previously determined trajectory. In various examples, the vehicle computing system may be configured to calculate trajectories at the pre-determined rate. In such examples, the estimated location of the vehicle may be determined based on a most recently (previously) determined trajectory calculated at the pre-determined rate.

The lateral coordinate of the estimated location of the vehicle may include a lateral position of the vehicle at the future time. In some examples, the vehicle computing system may determine the lateral coordinate of the estimated location based on the planned trajectory of the vehicle. In some examples, the lateral coordinate of an estimated location may be the same or substantially the same as the lateral coordinate associated with the planned trajectory at the time in the future (e.g., less than 2% difference, within 5 centimeters, etc.). In some examples, the lateral coordinate may be within a threshold lateral distance from the planned trajectory of the vehicle (e.g., within 10 centimeters, 3 inches, etc.). As such, in at least one example, the vehicle computing system may be configured to constrain the lateral coordinate of an estimated location to the lateral confines of the planned trajectory.

In various examples, the vehicle computing system may determine a new vehicle trajectory based in part on estimated location of the vehicle with a lateral coordinate confined to the planned trajectory. In such examples, the new vehicle trajectory may be determined based on longitudinal information (e.g., velocity, acceleration, etc.) and not lateral information (e.g., positional variations). In various examples, the longitudinal information associated with vehicle trajectory determination may include on one or more velocities associated with a vehicle action. The vehicle action can include an action determined by the vehicle computing system based on conditions in the environment (e.g., rules of the road, detected objects, etc.). As non-limiting examples, the vehicle action may include maintaining a velocity to traverse the environment, stopping at a stop sign, accelerating from a stopped position at an intersection, slowing to yield to another vehicle, and the like.

In at least one example, the action may be determined based on a detected object in the environment, such as to control the vehicle based on the object. The object may include a pedestrian, a bicyclist, a motorcycle, another vehicle, or the like. As such, the vehicle computing system may be configured to determine the action based on a determination that the object is relevant to the vehicle and/or based on a predicted object trajectory associated therewith. The vehicle computing system may determine object relevance and predicted object trajectories utilizing techniques such as those described in U.S. Patent Application Serial Number 16/389,720, filed April 19, 2019 and entitled "Dynamic Object Relevance Determination," U.S. Patent Application Serial Number 16/417,260, filed May 20, 2019 and entitled "Object Relevance Determination," U.S. Patent Application Serial Number 15/807,521, filed November 8, 2017, and entitled "Probabilistic Heat Maps for Behavior Prediction," U.S. Patent Application Serial Number 16/151,607, filed October 4, 2018 and entitled "Trajectory Prediction on Top-Down Scenes," U.S. Patent Application Serial Number 16/504,147 filed July 5, 2019 and entitled "Prediction on Top-Down Scenes based on Action Data".

The velocit(ies) associated with the vehicle action can represent one or more velocities associated with the vehicle performing the vehicle action. For example, the velocit(ies) can include velocities associated with slowing the vehicle to stop at a red light. Though this is merely provided for an illustrative example and not intended to be so limiting. In at least one example, the vehicle computing system may determine the vehicle trajectory associated with the estimated location based on a velocity-based optimization of vehicle movement. In some examples, the vehicle computing system may determine the vehicle trajectory associated with the estimated location of the vehicle utilizing techniques such as those described in U.S. Patent Application Serial Number 16/805,118, filed February 28, 2020 and entitled "System and Method for Adjusting a Planned Trajectory of an Autonomous Vehicle. In various examples, the vehicle computing system may control the vehicle according to the vehicle trajectory determined based on the estimated location and the velocity-based optimization.

The techniques discussed herein may improve the functioning of a vehicle computing system in many ways. As discussed above, current trajectory determination systems include determining a vehicle trajectory by estimating a future vehicle location and determining lateral and longitudinally based trajectories. These systems then merge the lateral and longitudinally-based trajectories into a single vehicle trajectory for the vehicle to follow. However, by constraining a lateral coordinate of the estimated location of the vehicle to the planned path thereof, the techniques described herein can limit the trajectory determination to a velocity-based trajectory. In other words, the lateral constraint can remove the requirement to perform a lateral optimization in the trajectory determination process and the requirement to merge the lateral optimization with a velocity-based optimization. As such, the techniques described herein reduce a total amount of computing resources required to determine a vehicle trajectory, thereby improving the vehicle computing system.

Unlike the conventional control systems, the control system described herein may determine a trajectory for the vehicle to follow based on estimated location of the vehicle at the future time, adjusted for drive system delays. By accounting for the additional delay in drive system actuation, the techniques described herein may reduce errors introduced due to drive system actuation. In some examples, the reduction in errors may reduce an amount of computing resources required by the vehicle computing system to determine vehicle trajectories. Additionally, accounting for the actuation delay may enable the vehicle computing system to more effectively and efficiently maintain a continuous trajectory to track a planned path. Moreover, by accounting for latency and delays in control system actuations, the techniques described herein may improve the safe operation of the vehicle.

The techniques described herein may be implemented in a number of ways. Example implementations are provided below with reference to the following figures. Although discussed in the context of an autonomous vehicle, the methods, apparatuses, and systems described herein may be applied to a variety of systems (e.g., a sensor system or a robotic platform), and are not limited to autonomous vehicles. In one example, similar techniques may be utilized in driver-controlled vehicles in which such a system may provide an indication of whether it is safe to perform various maneuvers. In another example, the techniques may be utilized in an aviation or nautical context, or in any system using planning techniques.

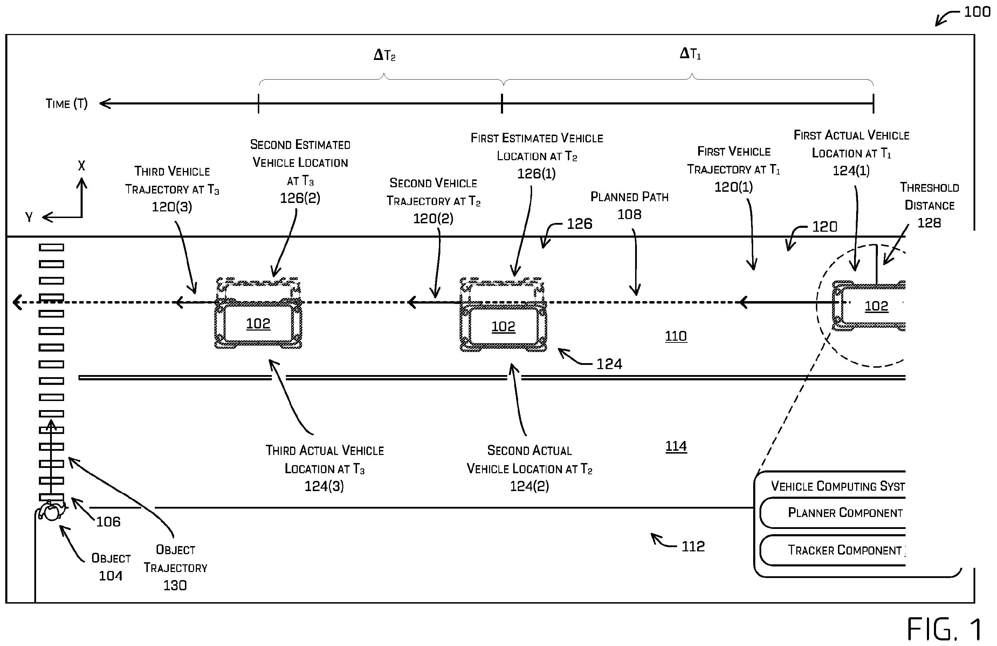

FIG. 1 is a schematic diagram illustrating a vehicle 102 implementing a control system operating in an example environment 100 in which a vehicle 102 implementing a control system operates. In the illustrated example, the vehicle 102 is traversing the environment 100, although in other examples the vehicle 102 may be stationary (e.g., stopped at a stop sign, red light, etc.) and/or parked in the environment 100. In some examples, such as the illustrative example of FIG. 1, one or more objects 104 may additionally operate in the environment 100. For instance, FIG. 1 illustrates an object 104 (e.g., a pedestrian) proceeding through a crosswalk 106. Although not illustrated, any number and/or type of objects, including static objects, e.g., road signs, parked vehicles, fire hydrants, buildings, curbs, or the like, and/or dynamic objects, e.g., pedestrians, animals, cyclists, trucks, motorcycles, other vehicles, or the like, can additionally or alternatively be present in the environment 100.

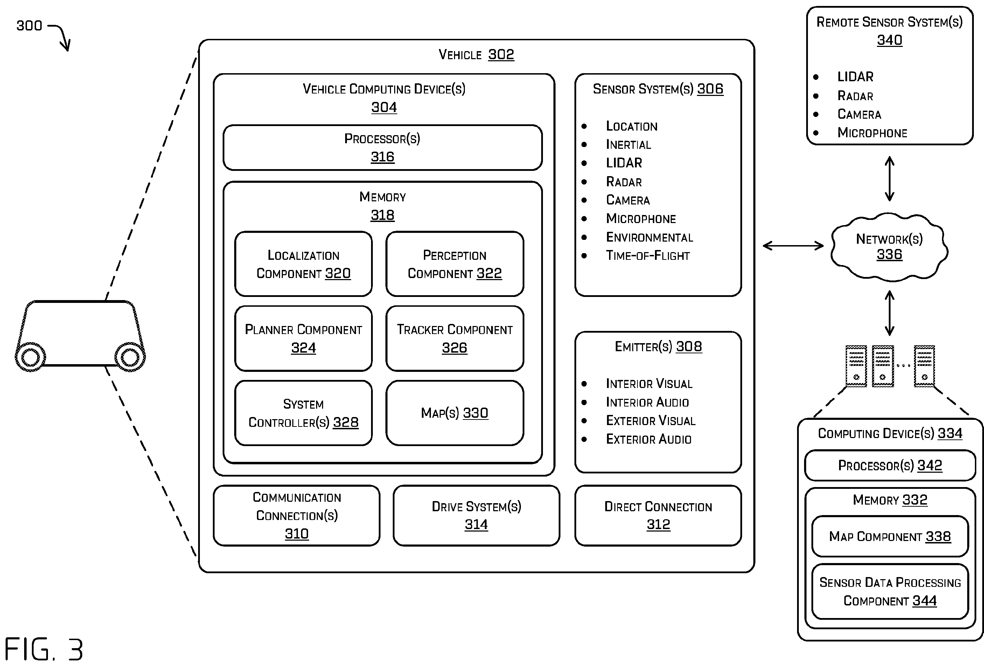

In various examples, a vehicle computing system 116 of the vehicle 102 may be configured to determine the objects 104 in the environment 100 based on sensor data received from one or more sensors. The sensors may include cameras, motion detectors, lidar, radar, inertial sensors, and the like. The sensors may be mounted on the vehicle 102 and/or may be remote from the vehicle 102, such as those mounted on other vehicles and/or mounted in the environment 100. In examples in which the sensors are remote sensors (e.g., on other vehicles, mounted in the environment 100), the vehicle computing system 116 may be configured to receive the sensor data via one or more networks. Additional details associated with the sensors are described below with regard to FIG. 3. In some examples, the vehicle computing system 116 may be configured to determine position, orientation, and/or location information associated with the vehicle 102 based on the sensor data.

In some examples, the vehicle 102 may be an autonomous vehicle configured to operate according to a Level 5 classification issued by the U.S. National Highway Traffic Safety Administration, which describes a vehicle capable of performing all safety-critical functions for the entire trip, with the driver (or occupant) not being expected to control the vehicle at any time. In such an example, since the vehicle 102 may be configured to control all functions from start to stop, including all parking functions, it can be unoccupied. In some examples, the vehicle 102 may include a semi-autonomous vehicle configured to perform at least a portion of the control functions associated with vehicular operation. Additional details associated with the vehicle 102 are described below.

FIG. 1 illustrates a scenario in which the vehicle 102 is traveling through the environment 100 according to a planned path 108. The planned path 108 may include a general planned route of travel for the vehicle 102 to travel from an initial location associated with a trip to a destination. In the illustrative example, the vehicle 102 is operating in a first lane 110 of a road 112, the road including the first lane 110 associated with traffic traveling in a first direction and a second lane 114 associated with traffic traveling in a second (opposite) direction. Though this is merely an illustrative example and the vehicle may be configured to operate in intersections, in multi-lane roads, highways, and the like.

The vehicle 102 may include a vehicle computing system 116 configured to perform some or all of the functions described herein. The vehicle computing system 116 may include a planner component 118 configured to determine the planned path 108 and vehicle trajectories 120 associated with the vehicle 102 operating according to the planned path 108. In various examples, the planner component 118 may be configured to determine the vehicle trajectories 120 at a pre-determined rate (e.g., every 0.1 second, every 0.15 seconds, etc.). In such examples, the vehicle trajectories 120 may be determined at a fixed time interval (ΔT). In some examples, the time interval may be determined based on a time associated with the planner component 118 calculating a next vehicle trajectory. For example, the planner component 118, traveling at a first vehicle trajectory 120(1) at a first time T₁, may initiate calculation of a second vehicle trajectory 120(2) to implement at a second time T₂. The time interval ΔT₁ between the first time and the second time T₂ may be a fixed time interval determined to provide the planner component sufficient time to determine the second vehicle trajectory 120(2) and enable implementation thereof at the second time T₂ (e.g., calculation time plus a buffer).

In some examples, the time interval may be determined based on a delay time associated with initiating a modification to a drive system component associated with a next vehicle trajectory 120. In such examples, the delay time may include a pre-determined time associated with drive system component delays. The drive system components may include a motor, engine, transmission, steering system components, braking system components, and the like. As will be discussed in detail below, such delays or latencies may be aggregated or otherwise combined to determine a total latency between trajectory determination and final actuation of the command. In such examples, the overall delay or latency determined may vary from time to time based on which components (or combinations of components) are actuated. In some examples, the drive system component delays may include time associated with the tracker component 122 generating a control signal, the drive system component receiving the control signal, and/or the drive system component actuating the control signal and modifying a setting associated with the drive system component. Continuing the example from above, at a first time T₁, the planner component 118 may initiate calculation of a second vehicle trajectory 120(2) associated with a second time T₂. The second vehicle trajectory 120(2) may include a decrease in velocity, requiring actuation of a braking component of the drive system. The delay time may account for a delay in actuating the braking component to cause the vehicle 102 to slow as necessary according to the second vehicle trajectory 120(2).

In some examples, the delay time associated with drive system components can include a maximum delay time associated with the drive system components. In such examples, the delay time can include a delay associated with a drive system component that has associated therewith a longest delay. In some examples, the delay time can include a minimum delay time associated with the drive system components. In such examples, the delay time can include a delay associated with a drive system component that has associated therewith a shortest delay. In some examples, the delay time can include an average delay time associated with the drive system components. In some examples, the delay time can include an average delay of two or more drive system components associated with vehicle trajectory 120 based control signals. In some examples, the delay time can include an average of the maximum delay time and the minimum delay time. For example, a delay associated with a motor causing a vehicle to accelerate may include a delay time of 50 milliseconds and a delay associated with a braking component may include a delay time of 20 milliseconds. The delay time associated with the drive system components may be 35 seconds. Though this is merely an example and other times and component delays are contemplated herein.

In various examples, the planner component 118 may be configured to dynamically determine the time interval ΔT during vehicle operation. In some examples, the planner component 118 may dynamically determine the time interval ΔT based on a determined action for the vehicle to perform. In various examples, the planner component 118 may be configured to determine the action for the vehicle to perform with respect to the environment. In some examples, the planner component 118 may determine the action based on a cost-based action analysis. In such examples, the planner component 118 may determine the action utilizing techniques such as those described in U.S. Patent Application Serial Number 17/202,795, filed February 24, 2021 and entitled "Cost-Based Action Determination". For example, the planner component 118 may detect the object 104 approaching the crosswalk 106 and may determine to yield to the object 104. Accordingly, the action includes slowing to enable the object 104 to proceed across the road 112 in the crosswalk 106. The planner component 118 may determine that the action includes a slowing action, which includes the actuating of a braking drive system component. As such, the planner component dynamically determines the time interval ΔT based on a delay time associated with the braking drive system.

In at least one example, the time interval ΔT can include a delay associated with vehicle trajectory 120 calculation and the delay associated with the drive system component actuation. For example, the time intervals ΔT₁ and ΔT₂ can include a time associated with vehicle trajectory calculation and a delay time associated with the braking system component, though this is just an example, and any other delay times associated with drive system components are contemplated herein.

As discussed above, the planner component 118 may be configured to determine an updated vehicle trajectory 120 for the vehicle 102 to travel through the environment 100, based on the time interval. The updated vehicle trajectory 120 may include a future trajectory associated with the vehicle at a future time. Accordingly, the planner component 118 may be configured to determine and provide a continuous trajectory for the vehicle to follow. For example, the planner component 118, at the first time T₁ determines a second vehicle trajectory 120(2) for the vehicle to follow at a second (future) time T₂, and at the second time T₂, the planner component 118 determines a third vehicle trajectory 120(3) for the vehicle to follow at a third (future) time T₃.

In at least one example, the planner component 118 determines the updated vehicle trajectory 120 by determining an actual vehicle location 124 of the vehicle at a particular time and determining an estimated vehicle location 126 of the vehicle at a next time interval. In some examples, the planner component determines the estimated vehicle location 126 and/or the updated vehicle trajectory 120 based on a determination that the actual vehicle location 124 at the particular time is within a threshold distance 128 (e.g., 1 meter, 3 meters, 6 feet, etc.) of a planned trajectory. The planned trajectory may include a previously determined vehicle trajectory 120, such as that associated with a previous time interval. For example, at T₂, the planner component 118 determines whether the second actual vehicle location 124(2) is within a threshold distance 128 of the first vehicle trajectory 120(1), at T₃, the planner component 118 determines whether the third actual vehicle location 124(3) is within the threshold distance 128 of the second vehicle trajectory 120(2), and so on.

In some examples, the planner component 118 may determine whether a distance between the actual vehicle location 124 and the planned trajectory meets or exceeds the threshold distance 128. In some examples, based on a determination that the actual vehicle location 124 is not within the threshold distance 128 of the planned path 108 (e.g., the distance meets or exceeds the threshold distance 128), the planner component 118 may determine to cease further operation of the vehicle 102 in the environment 100. In some examples, responsive to a determination to cease further operation, the planner component 118 may determine a trajectory for the vehicle 102 stop at a safe location, such as to pull over to a side of the first lane 110 to park. In some examples, the planner component 118 may be configured to call a remote operator based on a determination that the actual vehicle location 124 is more than the threshold distance 128 from the planned trajectory. In such examples, the planner component 118 may receive control signals from the remote operator, such as to ensure safe operation of the vehicle 102 through the environment 100.

Based on a determination that the actual vehicle location is within the threshold distance 128 of the planned trajectory (e.g., the distance is less than the threshold distance 128), the planner component 118 may determine the estimated vehicle location 126 at a future time based in part on the time interval ΔT. For example, the planner component 118 determines a first estimated vehicle location 126(1) at a second time T₂ based in part on a first actual vehicle location 124(1) at the first time T₁ and the first time interval ΔT₁. In various examples, the estimated vehicle location 126 may include a longitudinal coordinate (Y) and a lateral coordinate (X). In various examples, the planner component 118 may determine a longitudinal coordinate of the estimated vehicle location 126 based in part on one or more speeds associated with a planned trajectory (e.g., a previously determined vehicle trajectory). For example, the planner component 118 may determine the longitudinal coordinate based on how far the vehicle 102 is estimated to travel during a time interval ΔT between a current time and the future time, while traveling at one or more speeds associated with the previously determined vehicle trajectory. For example, the planner component 118 may determine the longitudinal coordinate associated with the first estimated vehicle location 126(1) based on a longitudinal distance between the first actual vehicle location 124(1), the first vehicle trajectory 120(1), and the first time interval ΔT₁.

The lateral coordinate of the estimated vehicle location 126 may include a lateral position of the vehicle at the future time. In some examples, the planner component 118 may determine the lateral coordinate of the estimated vehicle location 126 based on the planned trajectory of the vehicle 102. In some examples, the lateral coordinate may represent an X-axis coordinate of the vehicle 102 associated with a perfect track of the vehicle along the previously determined trajectory. In some examples, the lateral coordinate of the estimated vehicle location 126 may be the same or substantially the same as the lateral coordinate associated with the planned trajectory (e.g., an X-coordinate of the planned trajectory) at the time in the future (e.g., less than 2% difference, within 5 centimeters, etc.). In some examples, the lateral coordinate may be within a threshold lateral distance from the planned trajectory (e.g., within 10 centimeters, 3 inches, etc.). As such, in at least one example, the planner component 118 may be configured to constrain the lateral coordinate of an estimated vehicle location 126 to the lateral confines of the planned trajectory.

In various examples, the planner component 118 may determine a new or updated vehicle trajectory 120 based in part on estimated vehicle location 126 with a lateral coordinate confined to the planned trajectory. In such examples, the new vehicle trajectory 120 may be determined based on longitudinal information (e.g., velocity, acceleration, etc.) and not lateral information (e.g., positional variations). In various examples, the longitudinal information associated with new vehicle trajectory 120 determination may include on one or more velocities associated with a determined vehicle action. As described above, the vehicle action may include an action determined by the vehicle computing system based on conditions in the environment 100 (e.g., rules of the road, detected objects, etc.). As non-limiting examples, the vehicle action may include maintaining a velocity to traverse the environment, stopping at a stop sign, accelerating from a stopped position at an intersection, slowing to yield to another vehicle or other object, and the like.

In at least one example, the planner component 118 may determine the action based on a detected object 104 in the environment, such as to control the vehicle based on the object 104. As an illustrative, non-limiting example, the vehicle action may include the vehicle 102 yielding to an object 104 (e.g., the pedestrian) crossing a road 112, such as in the crosswalk 106. The object 104 may include a pedestrian, a bicyclist, a motorcycle, another vehicle, or the like. In some examples, the vehicle computing system may be configured to determine the action based on an object 104 based on a determination that the object 104 is relevant to the vehicle 102. In some examples, a determination of object relevance may be based on a predicted object trajectory 130 associated therewith. In such examples, the planner component 118 (e.g., a prediction component associated therewith) may be configured to determine the predicted object trajectory 130 and/or relevance of the object 104 associated therewith. In some examples, the planner component may determine object relevance utilizing techniques such as those described in U.S. Patent Application Serial Numbers 16/389,720, and/or 16/417,260. In some examples, the planner component 118 may determine the predicted object trajectory 130 utilizing techniques such as those described in U.S. Patent Application Serial Numbers 15/807,521, 16/151,607, and 16/504,147.

In various examples, the planner component 118 may determine one or more speeds associated with the new vehicle trajectory 120 based on the action. In some examples, the one or more speeds may be determined based on a previous vehicle trajectory 120 (e.g., the planned trajectory), such as that associated with a previous (consecutive) time interval. For example, the planner component 118 may initiate a determination of a third vehicle trajectory 120(3) at a second time T₂. The planner component 118 may determine the second estimated location 126(2) based on a second actual vehicle location 124(2) at the second time T₂. The planner component 118 may determine that the action includes the vehicle 102 yielding to the object 104 and that the vehicle must continue to slow a forward speed associated with the second vehicle trajectory 120(2) in order to ensure the vehicle 102 maintains a safe distance (e.g., 3 feet, 1 meter, 2 meters, etc.) from the crosswalk 106. Based on the second estimated vehicle location 126(2), the second vehicle trajectory 120(2), and the location of the crosswalk 106 (and/or an estimated future location of the object 104), the planner component 118 may determine the third vehicle trajectory 120(3) and/or the one or more speeds associated therewith. In various examples, by constraining the estimated vehicle location 126 to the planned trajectory and thus constraining the vehicle trajectory 120 calculations to longitudinal, action-based movements (e.g., not lateral movement), the techniques described herein may improve functioning of the vehicle computing system 116.

In at least one example, the planner component 118 of the vehicle computing system 116 may determine the new vehicle trajectory 120 associated with the estimated vehicle location 126 based on a velocity-based optimization of vehicle movement utilizing techniques such as those described in U.S. Patent Application Serial Number 16/805,118. In various examples, the planner component 118 may be configured send the vehicle trajectories 120 to the tracker component 122. In various examples, the tracker component 122 may be configured to determine a position and/or orientation of the vehicle at a particular time associated with a particular vehicle trajectory 120 and generate one or more control signals to send to one or more drive system components to cause the vehicle to be control according to the vehicle trajectories 120 received from the planner component 118. As such, the tracker component 122 may continually monitor a current state of the vehicle 102 and determine control signals to ensure that the vehicle follows or continually steers back to a vehicle trajectory 120. For example, the tracker component 122 may receive the second vehicle trajectory 120(2) from the planner component 118, the second vehicle trajectory 120(2) including a slowing action (e.g., one or more speeds associated with the vehicle 102 yielding to the pedestrian). In some examples, the tracker component 122 may generate a control signal to send to a braking system component of a vehicle drive system based on the second vehicle trajectory 120(2). The tracker component 122 may send the control signal to the braking system component to cause the vehicle 102 to be controlled according to the vehicle trajectory at the second time. For another example, the tracker component 122 may determine a current location of the vehicle 102, such as the second actual vehicle location 124(2) at the second time and may determine steering angles, motor and/or engine actions (e.g., to speed up, maintain speed, slow down, etc.), braking actions, and/or the like to cause the 102 to follow the second vehicle trajectory 120(2) at the time T₂.

In various examples, the tracker component 122 may receive the vehicle trajectory 120 prior to the time associated therewith. In some examples, the planner component 118 may send trajectory data to the tracker component 122 at a time interval prior to the time associated with implementing the vehicle trajectory. In some examples, the time interval may be a time associated with the drive system component delay, such as that described above. In some examples, the tracker component 122 may be configured to send the signal at an appropriate time to cause one or more relevant drive system components to engage at a particular time corresponding to the vehicle trajectory 120. In such examples, the vehicle computing system 116 may be configured to correct for delays in calculating and/or implementing vehicle trajectories 120, such as to cause the vehicle 102 to more closely track a planned path 108. For example, the planner component 118 may send a third vehicle trajectory 120(3) to the tracker component 122 at a time prior to the third time T₃, the time including a time delay associated with the braking system. The tracker component 122 may receive the third vehicle trajectory 120(3) and may generate a control signal based on the third vehicle trajectory 120(3) and the previous vehicle trajectory (e.g., the second vehicle trajectory 120(2)). The tracker component 122 may send the control signal to the braking component to cause the vehicle to be controlled according to the third vehicle trajectory 120(3) at the third time T₃. By providing control signals to drive system components at times that account for delays associated with the drive system components, the techniques described herein may cause the vehicle computing system 116 to more accurately and effectively control the vehicle 102, maintaining a continuous trajectory to track the planned path 108.

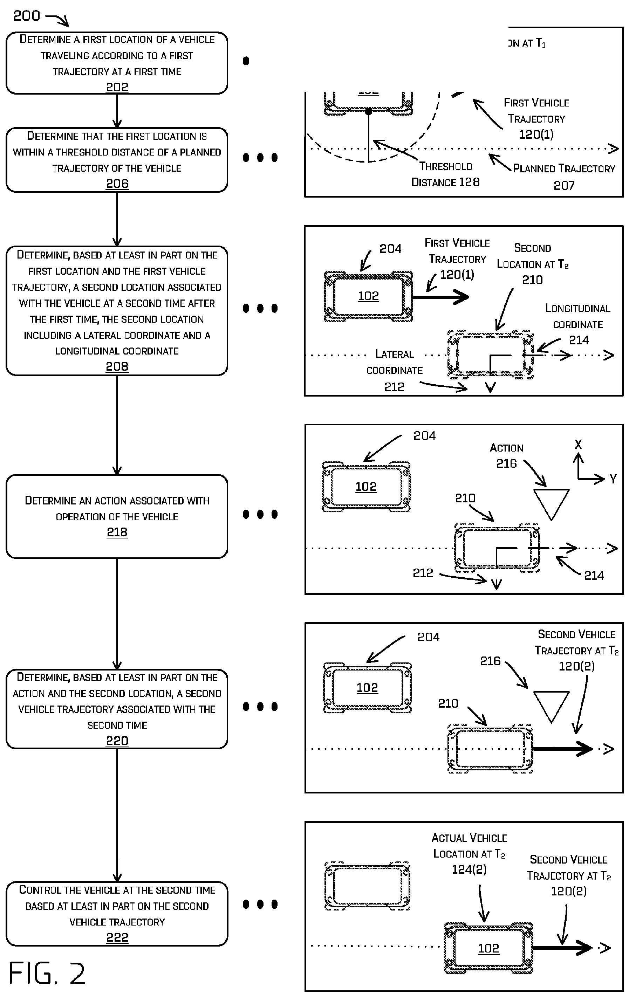

FIG. 2 depicts an example process 200 for determining a trajectory for a vehicle 102.

At operation 202, a vehicle computing system, such as vehicle computing system 116, determines a first location 204 of the vehicle 102 traveling according to a first vehicle trajectory 120(1) at a first time T₁. In some examples, the first location 204 may represent an actual vehicle location, such as first actual vehicle location 124(1). In some examples, the vehicle computing system may determine the first location 204 based on sensor data from one or more sensors. The sensor data may include data relating to a current state of the vehicle 102 such as, for example, a velocity, an acceleration, an acceleration, a position, and/or an orientation of the vehicle 102. In some examples, the vehicle 102 may operate according to a planned path 108. The planned path may be, for example, a general drive path associated with the vehicle 102 traveling to a final destination.

At operation 206, the vehicle computing system determines that the first location 204 is within a threshold distance 128 of a planned trajectory 207 of the vehicle 102. The planned trajectory 207 may include a previously determined vehicle trajectory, such as a vehicle trajectory associated with a previous time interval prior to T₁. The threshold distance 128 may represent a distance (e.g., 3 feet, 1 meter, 2 meters, etc.) from the planned trajectory 207 that indicates that the vehicle 102 is remaining within a safe distance of the planned trajectory 207. For example, the threshold distance 128 may provide an indication that the vehicle 102 is not drifting away from the planned trajectory 207. In some examples, the threshold distance 128 may represent a pre-determined safety parameter associated with vehicle 102 operation. In such examples, by verifying that the first location 204 is within the threshold distance, the vehicle computing system may ensure safe operation of the vehicle 102.

At operation 208, the vehicle computing system determines, based at least in part in the first location 204 and the first vehicle trajectory 120(1), a second location 210 associated with the vehicle 102 at a second time after the first time, the second location 210 including a lateral coordinate 212 and a longitudinal coordinate 214. In various examples, the second location 210 may be an estimated vehicle location, such as first estimated vehicle location 126(1), associated with the second time. In some examples, the vehicle computing system may project the first location 204 onto the planned trajectory 207and determine the second location 210. In such examples, the vehicle computing system may modify a lateral coordinate 212 of the first location 204 to be the same or substantially the same as a lateral component the planned trajectory 207. The vehicle computing system may then determine the second location 210 based on the first location 204 projected onto the planned trajectory 207, such as by estimating a distance the vehicle will travel based on the first vehicle trajectory 120(1). In other words, the vehicle computing system may estimate a location of the vehicle 102 at a future time based on a movement of the vehicle 102 according to the planned trajectory 207.

As discussed above, the second location 210 may include a lateral coordinate 212 and a longitudinal coordinate 214. The lateral coordinate of the second location 210 includes a lateral position of the vehicle 102 at the second (future) time. In some examples, the vehicle computing system determines the lateral coordinate 212 of the second location 210 based on the planned trajectory 207. In some examples, the lateral coordinate 212 of the second location 210 may be the same or substantially the same as a lateral coordinate associated with the planned trajectory 207 (e.g., an X-coordinate of the planned trajectory 207) at the time in the future (e.g., less than 2% difference, within 5 centimeters, etc.). In some examples, the lateral coordinate 212 may be within a threshold lateral distance from the planned trajectory 207 (e.g., within 10 centimeters, 3 inches, etc.). As such, in at least one example, the vehicle computing system may be configured to constrain the lateral coordinate 212 of the second location 210 to the lateral confines of the planned trajectory 207.

In various examples, the vehicle computing system may determine a longitudinal coordinate 214 of the second location 210 based on one or more speeds associated with a current vehicle trajectory, such as the first vehicle trajectory 120(1) at the first time T₁. In some examples, the vehicle computing system may be configured to determine vehicle trajectories 120 at a rate (e.g., every 100 milliseconds, 126 milliseconds, etc.), such as to provide a continuous trajectory and ensure a smooth ride for passengers of the vehicle 102. In such examples, the vehicle computing system determines the longitudinal coordinate 214 based on a current trajectory associated with the vehicle while determining an updated trajectory associated with a second, future time.

In various examples, the second time may be a time interval after the first time. In some examples, the time interval may be based on a time associated with calculating vehicle trajectories. Additionally, in some examples, the time interval may be determined based on one or more time delays associated with vehicle drive components, such as based on generating control signals and causing the vehicle drive components to modify one or more settings based on the control signals. In some examples, the time interval may be associated with a predetermined rate (e.g., 100 milliseconds, 150 milliseconds, etc.). As discussed above, in some examples, the vehicle computing system may be configured to dynamically determine the time interval, such as based on a determined vehicle action 216. In such examples, the rate and time interval associated therewith may be dynamically determined during vehicle operation.

At operation 218, the vehicle computing system determines an action 216 associated with operation of the vehicle 102. As described above, the vehicle computing system may determine the action 216 based on conditions in the environment 100 (e.g., rules of the road, detected objects, etc.). As non-limiting examples, the vehicle action may include maintaining a velocity to traverse the environment, slowing to stop at a stop sign, accelerating from a stopped position, slowing to yield to another vehicle or other object, and the like.

In at least one example, the vehicle computing system determines the action based on an object, such as object 104, detected in the environment. For example, the vehicle computing system may determine to accelerate to proceed ahead of a detected object in a merging scenario. For another example, the vehicle computing system may determine to decelerate to yield to an object. As discussed above, the vehicle computing system may determine the action 216 based on a determination that a detected object is relevant to the vehicle 102, utilizing techniques such as those described in 16/389,720, and/or 16,417,260. In some examples, the vehicle computing system may determine object relevance and/or the action 216 based on a predicted object trajectory associated with the detected object. In such examples, the vehicle computing system may be configured to determine the predicted object trajectory utilizing techniques such as those described in U.S. Patent Application Serial Numbers 15/807,521, 16/151,607, and 16/504,147.

At operation 220, the vehicle computing system determines, based at least in part on the action 216 and the second location 210, a second vehicle trajectory 120(2) associated with the second time. The second vehicle trajectory 120(2) may include one or more speeds and/or direction of travel associated with vehicular operation at the second time. In various examples, the direction of travel of the second vehicle trajectory 120(2) may correspond to the planned path 108. In such examples, the vehicle computing system may determine trajectories to maintain or substantially maintain the vehicle 102 on the planned path 108.

In various examples, the speed(s) associated with the second vehicle trajectory 120(2) may be determined based in part on the first vehicle trajectory 120(1) and the action 216. For example, the vehicle computing system may determine that the action 216 includes slowing to a stop at a stop sign. The vehicle computing system determines a distance from the second location 210 to a stopped location associated with the stop sign and determines a rate of deceleration associated with controlling the vehicle 102 smoothly to a stopped position. The vehicle computing system may determine one or more speeds associated with the second location 210 based on the rate of deceleration.

At operation 222, the vehicle computing system controls the vehicle at the second time based at least in part on the second vehicle trajectory 120(2). In various examples, the vehicle computing system may generate control signals to provide to drive system components, to cause the vehicle 102 to operate according to the second vehicle trajectory 120(2). In some examples, the vehicle computing system may send the control signals at the second time. In some examples, the vehicle computing system may be configured to send the control signals prior to the second time, such as based on a time delay associated with the drive system components. In such examples, the vehicle computing system may be configured to cause the vehicle to travel according to the second vehicle trajectory 120(2) at the second time, such as to prevent errors associated with control signaling and drive system actuation.

FIG. 3 is a block diagram of an example system 300 for implementing the techniques described herein. In at least one example, the system 300 may include a vehicle 302, such as vehicle 102.

The vehicle 302 may include one or more vehicle computing devices 304, such as the vehicle computing systems described herein, one or more sensor systems 306, one or more emitters 308, one or more communication connections 310, at least one direct connection 312, and one or more drive systems 314.

The vehicle computing device 304 may include one or more processors 316 and memory 318 communicatively coupled with the one or more processors 316. In the illustrated example, the vehicle 302 is an autonomous vehicle; however, the vehicle 302 could be any other type of vehicle, such as a semi-autonomous vehicle, or any other system having at least an image capture device (e.g., a camera enabled smartphone). In the illustrated example, the memory 318 of the vehicle computing device 304 stores a localization component 320, a perception component 322, a planner component 324, a tracker component 326, one or more system controllers 328, and one or more maps 330. Though depicted in FIG. 3 as residing in the memory 318 for illustrative purposes, it is contemplated that a localization component 320, a perception component 322, a planner component 324, a tracker component 326, one or more system controllers 328, and one or more maps 330, may additionally, or alternatively, be accessible to the vehicle 302 (e.g., stored on, or otherwise accessible by, memory remote from the vehicle 302, such as, for example, on memory 332 of a remote computing device 334).

In at least one example, the localization component 320 may include functionality to receive data from the sensor system(s) 306 to determine a position and/or orientation of the vehicle 302 (e.g., one or more of an x-, y-, z-position, roll, pitch, or yaw). For example, the localization component 320 may include and/or request / receive a map of an environment and may continuously determine a location and/or orientation of the autonomous vehicle within the map. In some instances, the localization component 320 may utilize SLAM (simultaneous localization and mapping), CLAMS (calibration, localization and mapping, simultaneously), relative SLAM, bundle adjustment, non-linear least squares optimization, or the like to receive image data, LIDAR data, radar data, IMU data, GPS data, wheel encoder data, and the like to accurately determine a location of the autonomous vehicle. In some instances, the localization component 320 may provide data to various components of the vehicle 302 to determine an initial position of an autonomous vehicle for generating a path polygon (e.g., vehicle corridor) associated with the vehicle path, as discussed herein.

In some instances, the perception component 322 may include functionality to perform object detection, segmentation, and/or classification. In some examples, the perception component 322 may provide processed sensor data that indicates a presence of an object (e.g., entity) that is proximate to the vehicle 302 and/or a classification of the object as an object type (e.g., car, pedestrian, cyclist, animal, building, tree, road surface, curb, sidewalk, unknown, etc.). In some examples, the perception component 322 may provide processed sensor data that indicates a presence of a stationary entity that is proximate to the vehicle 302 and/or a classification of the stationary entity as a type (e.g., building, tree, road surface, curb, sidewalk, unknown, etc.). In additional or alternative examples, the perception component 322 may provide processed sensor data that indicates one or more characteristics associated with a detected object (e.g., a tracked object) and/or the environment in which the object is positioned. In some examples, characteristics associated with an object may include, but are not limited to, an x-position (global and/or local position), a y-position (global and/or local position), a z-position (global and/or local position), an orientation (e.g., a roll, pitch, yaw), an object type (e.g., a classification), a velocity of the object (e.g., object speed), an acceleration of the object, an extent of the object (size), etc. Characteristics associated with the environment may include, but are not limited to, a presence of another object in the environment, a state of another object in the environment, a time of day, a day of a week, a season, a weather condition, an indication of darkness/light, etc.

In general, the planner component 324 may determine a path for the vehicle 302 to follow to traverse through an environment. For example, the planner component 324 may determine various routes and trajectories and various levels of detail. For example, the planner component 324 may determine a route to travel from a first location (e.g., a current location) to a second location (e.g., a target location). For the purpose of this discussion, a route may include a sequence of waypoints for travelling between two locations. As non-limiting examples, waypoints include streets, intersections, global positioning system (GPS) coordinates, etc. Further, the planner component 324 may generate an instruction for guiding the autonomous vehicle 302 along at least a portion of the route from the first location to the second location. In at least one example, the planner component 324 may determine how to guide the autonomous vehicle from a first waypoint in the sequence of waypoints to a second waypoint in the sequence of waypoints. In some examples, the instruction may be a trajectory, or a portion of a trajectory. In some examples, multiple trajectories may be substantially simultaneously generated (e.g., within technical tolerances) in accordance with a receding horizon technique, wherein one of the multiple trajectories is selected for the vehicle 302 to navigate.

In some examples, the planner component 324 may include a prediction component to generate predicted trajectories associated with objects operating in an environment. For example, a prediction component may generate one or more predicted trajectories for objects within a threshold distance from the vehicle 302. In some examples, a prediction component may measure a trace of an object and generate a trajectory for the object based on observed and predicted behavior. In various examples, the planner component 324 may be configured to determine an action for the vehicle to take based at least in part on the predicted trajectories of objects in the environment. In such examples, the planner component 324 may select a vehicle trajectory for the vehicle to travel based at least in part on the action (e.g., based in part on the detected object and/or a predicted object trajectory associated therewith).

In various examples, the planner component 324 may provide a selected vehicle trajectory to the tracker component 326. In various examples, the tracker component 326 may additionally receive position and/or orientation data, such as that determined by the localization component 320. The tracker component 326, such as tracker component 122, may be configured to determine a position and/or orientation of the vehicle with respect to a planned trajectory, such as based on steering angles, velocities, accelerations, drive direction, drive gear, and/or gravity acceleration. The tracker component 326 may be configured to determine control signals to cause the vehicle to adjust one or more drive components, such as to track a determined trajectory. The tracker component 326 may determine the adjustments based on the current position and/or orientation data, such as to cause the vehicle to accurately track or steer back to a vehicle trajectory.

In at least one example, the vehicle computing device 304 may include one or more system controllers 328, which may be configured to control steering, propulsion, braking, safety, emitters, communication, and other systems of the vehicle 302. The system controller(s) 328 may communicate with and/or control corresponding systems of the drive system(s) 314 and/or other components of the vehicle 302.

The memory 318 may further include one or more maps 330 that may be used by the vehicle 302 to navigate within the environment. For the purpose of this discussion, a map may be any number of data structures modeled in two dimensions, three dimensions, or N-dimensions that are capable of providing information about an environment, such as, but not limited to, topologies (such as intersections), streets, mountain ranges, roads, terrain, and the environment in general. In some instances, a map may include, but is not limited to: texture information (e.g., color information (e.g., RGB color information, Lab color information, HSV/HSL color information), and the like), intensity information (e.g., LIDAR information, RADAR information, and the like); spatial information (e.g., image data projected onto a mesh, individual "surfels" (e.g., polygons associated with individual color and/or intensity)), reflectivity information (e.g., specularity information, retroreflectivity information, BRDF information, BSSRDF information, and the like). In one example, a map may include a three-dimensional mesh of the environment. In some examples, the vehicle 302 may be controlled based at least in part on the map(s) 330. That is, the map(s) 330 may be used in connection with the localization component 320, the perception component 322, and/or the planner component 324 to determine a location of the vehicle 302, detect objects in an environment, and/or generate routes and/or trajectories to navigate within an environment.

In various examples, the map(s) 330 may be utilized by the vehicle computing device 304 to determine a right of way, such as at an intersection. The right of way may indicate an entity (e.g., the vehicle 302 or an object) that has priority at the intersection or other junction. In various examples, the map(s) 330 may indicate the right of way based on a vehicle location, direction of travel, object location, object direction of travel, object predicted trajectory, or the like.

In some examples, the one or more maps 330 may be stored on a remote computing device(s) (such as the computing device(s) 334) accessible via network(s) 336, such as in map component 338. In some examples, multiple maps 330 may be stored based on, for example, a characteristic (e.g., type of entity, time of day, day of week, season of the year, etc.). Storing multiple maps 330 may have similar memory requirements, but increase the speed at which data in a map may be accessed.

As can be understood, the components discussed herein (e.g., the localization component 320, the perception component 322, the planner component 324, the tracker component 326, the one or more system controllers 328, and the one or more maps 330 are described as divided for illustrative purposes. However, the operations performed by the various components may be combined or performed in any other component.

In some instances, aspects of some or all of the components discussed herein may include any models, techniques, and/or machine learning techniques. For example, in some instances, the components in the memory 318 (and the memory 332, discussed below) may be implemented as a neural network.

As described herein, an exemplary neural network is a biologically inspired technique which passes input data through a series of connected layers to produce an output. Each layer in a neural network may also comprise another neural network, or may comprise any number of layers (whether convolutional or not). As can be understood in the context of this disclosure, a neural network may utilize machine learning, which may refer to a broad class of such techniques in which an output is generated based on learned parameters.

Although discussed in the context of neural networks, any type of machine learning may be used consistent with this disclosure. For example, machine learning techniques may include, but are not limited to, regression techniques (e.g., ordinary least squares regression (OLSR), linear regression, logistic regression, stepwise regression, multivariate adaptive regression splines (MARS), locally estimated scatterplot smoothing (LOESS)), instance-based techniques (e.g., ridge regression, least absolute shrinkage and selection operator (LASSO), elastic net, least-angle regression (LARS)), decisions tree techniques (e.g., classification and regression tree (CART), iterative dichotomiser 3 (ID3), Chi-squared automatic interaction detection (CHAID), decision stump, conditional decision trees), Bayesian techniques (e.g., naive Bayes, Gaussian naive Bayes, multinomial naive Bayes, average one-dependence estimators (AODE), Bayesian belief network (BNN), Bayesian networks), clustering techniques (e.g., k-means, k-medians, expectation maximization (EM), hierarchical clustering), association rule learning techniques (e.g., perceptron, back-propagation, hopfield network, Radial Basis Function Network (RBFN)), deep learning techniques (e.g., Deep Boltzmann Machine (DBM), Deep Belief Networks (DBN), Convolutional Neural Network (CNN), Stacked Auto-Encoders), Dimensionality Reduction Techniques (e.g., Principal Component Analysis (PCA), Principal Component Regression (PCR), Partial Least Squares Regression (PLSR), Sammon Mapping, Multidimensional Scaling (MDS), Projection Pursuit, Linear Discriminant Analysis (LDA), Mixture Discriminant Analysis (MDA), Quadratic Discriminant Analysis (QDA), Flexible Discriminant Analysis (FDA)), Ensemble Techniques (e.g., Boosting, Bootstrapped Aggregation (Bagging), AdaBoost, Stacked Generalization (blending), Gradient Boosting Machines (GBM), Gradient Boosted Regression Trees (GBRT), Random Forest), SVM (support vector machine), supervised learning, unsupervised learning, semi-supervised learning, etc. Additional examples of architectures include neural networks such as ResNet30, ResNet101, VGG, DenseNet, PointNet, and the like.

In at least one example, the sensor system(s) 306 may include lidar sensors, radar sensors, ultrasonic transducers, sonar sensors, location sensors (e.g., GPS, compass, etc.), inertial sensors (e.g., inertial measurement units (IMUs), accelerometers, magnetometers, gyroscopes, etc.), cameras (e.g., RGB, IR, intensity, depth, time of flight, etc.), microphones, wheel encoders, environment sensors (e.g., temperature sensors, humidity sensors, light sensors, pressure sensors, etc.), etc. The sensor system(s) 306 may include multiple instances of each of these or other types of sensors. For instance, the LIDAR sensors may include individual LIDAR sensors located at the corners, front, back, sides, and/or top of the vehicle 302. As another example, the camera sensors may include multiple cameras disposed at various locations about the exterior and/or interior of the vehicle 302. The sensor system(s) 306 may provide input to the vehicle computing device 304. Additionally or in the alternative, the sensor system(s) 306 may send sensor data, via the one or more networks 336, to the one or more computing device(s) 334 at a particular frequency, after a lapse of a predetermined period of time, in near real-time, etc.

The vehicle 302 may also include one or more emitters 308 for emitting light and/or sound. The emitters 308 in this example include interior audio and visual emitters to communicate with passengers of the vehicle 302. By way of example and not limitation, interior emitters may include speakers, lights, signs, display screens, touch screens, haptic emitters (e.g., vibration and/or force feedback), mechanical actuators (e.g., seatbelt tensioners, seat positioners, headrest positioners, etc.), and the like. The emitters 308 in this example also include exterior emitters. By way of example and not limitation, the exterior emitters in this example include lights to signal a direction of travel or other indicator of vehicle action (e.g., indicator lights, signs, light arrays, etc.), and one or more audio emitters (e.g., speakers, speaker arrays, horns, etc.) to audibly communicate with pedestrians or other nearby vehicles, one or more of which comprising acoustic beam steering technology.

The vehicle 302 may also include one or more communication connection(s) 310 that enable communication between the vehicle 302 and one or more other local or remote computing device(s). For instance, the communication connection(s) 310 may facilitate communication with other local computing device(s) on the vehicle 302 and/or the drive system(s) 314. Also, the communication connection(s) 310 may allow the vehicle to communicate with other nearby computing device(s) (e.g., computing device(s) 334, other nearby vehicles, etc.) and/or one or more remote sensor system(s) 340 for receiving sensor data.

The communications connection(s) 310 may include physical and/or logical interfaces for connecting the vehicle computing device 304 to another computing device or a network, such as network(s) 336. For example, the communications connection(s) 310 can enable Wi-Fi-based communication such as via frequencies defined by the IEEE 802.11 standards, short range wireless frequencies such as Bluetooth, cellular communication (e.g., 2G, 3G, 4G, 4G LTE, 3G, etc.) or any suitable wired or wireless communications protocol that enables the respective computing device to interface with the other computing device(s).

In at least one example, the vehicle 302 may include one or more drive systems 314. In some examples, the vehicle 302 may have a single drive system 314. In at least one example, if the vehicle 302 has multiple drive systems 314, individual drive systems 314 may be positioned on opposite ends of the vehicle 302 (e.g., the front and the rear, etc.). In at least one example, the drive system(s) 314 may include one or more sensor systems to detect conditions of the drive system(s) 314 and/or the surroundings of the vehicle 302. By way of example and not limitation, the sensor system(s) may include one or more wheel encoders (e.g., rotary encoders) to sense rotation of the wheels of the drive modules, inertial sensors (e.g., inertial measurement units, accelerometers, gyroscopes, magnetometers, etc.) to measure orientation and acceleration of the drive module, cameras or other image sensors, ultrasonic sensors to acoustically detect objects in the surroundings of the drive module, LIDAR sensors, radar sensors, etc. Some sensors, such as the wheel encoders may be unique to the drive system(s) 314. In some cases, the sensor system(s) on the drive system(s) 314 may overlap or supplement corresponding systems of the vehicle 302 (e.g., sensor system(s) 306).

The drive system(s) 314 may include many of the vehicle systems, including a high voltage battery, a motor to propel the vehicle, an inverter to convert direct current from the battery into alternating current for use by other vehicle systems, a steering system including a steering motor and steering rack (which can be electric), a braking system including hydraulic or electric actuators, a suspension system including hydraulic and/or pneumatic components, a stability control system for distributing brake forces to mitigate loss of traction and maintain control, an HVAC system, lighting (e.g., lighting such as head/tail lights to illuminate an exterior surrounding of the vehicle), and one or more other systems (e.g., cooling system, safety systems, onboard charging system, other electrical components such as a DC/DC converter, a high voltage junction, a high voltage cable, charging system, charge port, etc.). The non-limiting examples of the vehicle systems listed above may additionally or alternatively be referred to herein as "components" of the drive system(s) 314. In various examples, each of the components of the drive system(s) 314 may include a latency associated with processing control signals. In various examples, the vehicle computing device(s) 304 may be configured to determine updated vehicle trajectories and/or send control signals based on one or more component latencies. For example, the planner component 324 may be configured to determine updated trajectories at a time interval based in part on a component latency. For another example, the tracker component 326 may be configured to send signals to a drive system component based in part on an associated latency.

Additionally, the drive system(s) 314 may include a drive module controller which may receive and preprocess data from the sensor system(s) and to control operation of the various vehicle systems. In some examples, the drive module controller may include one or more processors and memory communicatively coupled with the one or more processors. The memory may store one or more modules to perform various functionalities of the drive system(s) 314. Furthermore, the drive system(s) 314 may also include one or more communication connection(s) that enable communication by the respective drive module with one or more other local or remote computing device(s).

In at least one example, the direct connection 312 may provide a physical interface to couple the one or more drive system(s) 314 with the body of the vehicle 302. For example, the direct connection 312 may allow the transfer of energy, fluids, air, data, etc. between the drive system(s) 314 and the vehicle. In some instances, the direct connection 312 may further releasably secure the drive system(s) 314 to the body of the vehicle 302.

In at least one example, the localization component 320, the perception component 322, the planner component 324, the tracker component 326, the one or more system controllers 328, and the one or more maps 330 and various components thereof, may process sensor data, as described above, and may send their respective outputs, over the one or more network(s) 336, to the computing device(s) 334. In at least one example, the localization component 320, the perception component 322, the planner component 324, the tracker component 326, the one or more system controllers 328, and the one or more maps 330 may send their respective outputs to the computing device(s) 334 at a particular frequency, after a lapse of a predetermined period of time, in near real-time, etc.

In some examples, the vehicle 302 may send sensor data to the computing device(s) 334 via the network(s) 336. In some examples, the vehicle 302 may receive sensor data from the computing device(s) 334 via the network(s) 336. The sensor data may include raw sensor data and/or processed sensor data and/or representations of sensor data. In some examples, the sensor data (raw or processed) may be sent and/or received as one or more log files.

The computing device(s) 334 may include processor(s) 342 and a memory 332 storing the map component 338 and a sensor data processing component 344. In some examples, the map component 338 may include functionality to generate maps of various resolutions. In such examples, the map component 338 may send one or more maps to the vehicle computing device 304 for navigational purposes. In various examples, the sensor data processing component 344 may be configured to receive data from one or more remote sensors, such as sensor systems 306 and/or remote sensor system(s) 340. In some examples, the sensor data processing component 344 may be configured to process the data and send processed data to the vehicle computing device(s) 304. In some examples, the sensor data processing component 344 may be configured to send raw sensor data to the vehicle computing device(s) 304.

The processor(s) 316 of the vehicle 302 and the processor(s) 342 of the computing device(s) 334 may be any suitable processor capable of executing instructions to process data and perform operations as described herein. By way of example and not limitation, the processor(s) 316 and 342 may comprise one or more Central Processing Units (CPUs), Graphics Processing Units (GPUs), or any other device or portion of a device that processes electronic data to transform that electronic data into other electronic data that may be stored in registers and/or memory. In some examples, integrated circuits (e.g., ASICs, etc.), gate arrays (e.g., FPGAs, etc.), and other hardware devices may also be considered processors in so far as they are configured to implement encoded instructions.

Memory 318 and 332 are examples of non-transitory computer-readable media. The memory 318 and 332 may store an operating system and one or more software applications, instructions, programs, and/or data to implement the methods described herein and the functions attributed to the various systems. In various implementations, the memory may be implemented using any suitable memory technology, such as static random access memory (SRAM), synchronous dynamic RAM (SDRAM), nonvolatile/Flash-type memory, or any other type of memory capable of storing information. The architectures, systems, and individual elements described herein may include many other logical, programmatic, and physical components, of which those shown in the accompanying figures are merely examples that are related to the discussion herein.

In some instances, the memory 318 and 332 may include at least a working memory and a storage memory. For example, the working memory may be a high-speed memory of limited capacity (e.g., cache memory) that is used for storing data to be operated on by the processor(s) 316 and 342. In some instances, the memory 318 and 332 may include a storage memory that may be a lower-speed memory of relatively large capacity that is used for long-term storage of data. In some cases, the processor(s) 316 and 342 cannot operate directly on data that is stored in the storage memory, and data may need to be loaded into a working memory for performing operations based on the data, as discussed herein.

It should be noted that while FIG. 3 is illustrated as a distributed system, in alternative examples, components of the vehicle 302 may be associated with the computing device(s) 334 and/or components of the computing device(s) 334 may be associated with the vehicle 302. That is, the vehicle 302 may perform one or more of the functions associated with the computing device(s) 334, and vice versa.

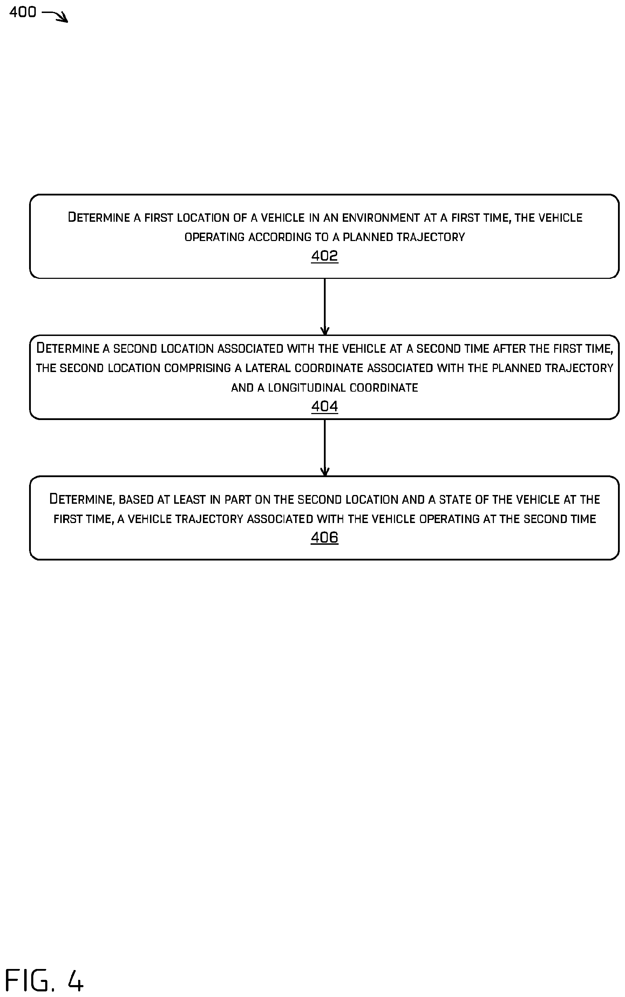

FIGS. 4-6 illustrate example processes in accordance with examples of the disclosure. These processes are illustrated as logical flow graphs, each operation of which represents a sequence of operations that may be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations may be combined in any order and/or in parallel to implement the processes.

FIG. 4 depicts an example process 400 for determining a vehicle trajectory associated with vehicle operation in an environment, such as environment 100. Some or all of the process 400 may be performed by one or more components in FIG. 3, as described herein. For example, some or all of the process 400 may be performed by the vehicle computing device(s) 304.

At operation 402, the process 400 includes determining a first location of a vehicle in an environment at a first time, the vehicle operating according to a planned trajectory. The planned trajectory may include a previously determined trajectory of the vehicle operating in the environment, such as at a previous time interval. The vehicle computing system may determine the first location based on sensor data received from one or more sensors. The sensor data may be indicative of a position and/or a movement of the vehicle in the environment. The sensor(s) may include cameras, motion detectors, lidar, radar, time of flight, or the like. The sensor(s) may be mounted on the vehicle and/or may include sensor(s) that are remote to the vehicle (e.g., mounted on other vehicles, mounted in the environment, etc.).

In various examples, the vehicle may operate according to a first trajectory (e.g., a first vehicle trajectory). The first trajectory may include a direction of travel and one or more speeds. In various examples, the vehicle computing system determines the first trajectory based on an action associated with vehicle operation in the environment. For example, the first trajectory may be associated with a vehicle slowing to yield to an object located proximate the vehicle in the environment.

In various examples, the vehicle computing system may determine whether the first location is within a threshold distance of a planned trajectory of the vehicle. The threshold distance may represent a safety parameter associated with vehicular operations. Based on a determination that the first location is equal to or greater than the threshold distance, the vehicle computing system may determine to cease operation of the vehicle, such as to ensure safe operation of the vehicle. In some examples, the vehicle computing system may determine a safe location for the vehicle to move (e.g., parking location, etc.) and may cause the vehicle to be controlled to the safe location. In some examples, the vehicle computing system may connect to a remote operator and may receive control inputs from the remote operator, to ensure safe operation of the vehicle. Based on a determination that the first location is equal to or less than the threshold distance, the vehicle computing system may determine continue operation in the environment.

At operation 404, the process 400 includes determining a second location associated with the vehicle at a second time after the first time, the second location comprising a lateral coordinate associated with the planned trajectory and a longitudinal coordinate. In some examples, the second location may represent an estimated future location of the vehicle at the second time (e.g., in the future). In some examples, the vehicle computing system may project the first location onto the planned trajectory and determine the second location. In such examples, the vehicle computing system may modify a lateral coordinate of the first location to be the same or substantially the same as the planned trajectory. The vehicle computing system may then determine the second location based on the first location projected onto the planned trajectory, such as by estimating a distance the vehicle will travel based on a first trajectory (e.g., a speed associated with the first trajectory). In other words, the vehicle computing system may estimate a location of the vehicle at a future time (e.g., the second time) based on a movement of the vehicle along the planned trajectory. In various examples, the vehicle computing system determines the longitudinal coordinate based on the distance and/or the first trajectory.

At operation 406, the process 400 includes determining, based at least in part on the second location and a state associated with the vehicle operating at the first time, a vehicle trajectory associated with the vehicle operating at the second time. The state of the vehicle operating at the first time may include a position, speed, steering angle, rotational rate, heading, and/or other aspects of the vehicle state associated with the first time. The vehicle trajectory may include, for example, a direction of travel and one or more speeds for the vehicle to follow in order to track the planned path as it traverses the environment. For example, the vehicle trajectory may account for unforeseen inconsistencies in the environment in order to maintain vehicle operations on safe and continuous path.

In various examples, the vehicle computing system may be configured to control the vehicle based at least in part in the vehicle trajectory. A tracker component of the vehicle computing system may receive the vehicle trajectory, such as from a planner component. The tracker component may determine an actual location of the vehicle at the second time and may determine one or more drive system components associated with causing the vehicle to operate according to the second trajectory. The tracker component may cause the drive system component(s) to actuate based on the second trajectory.

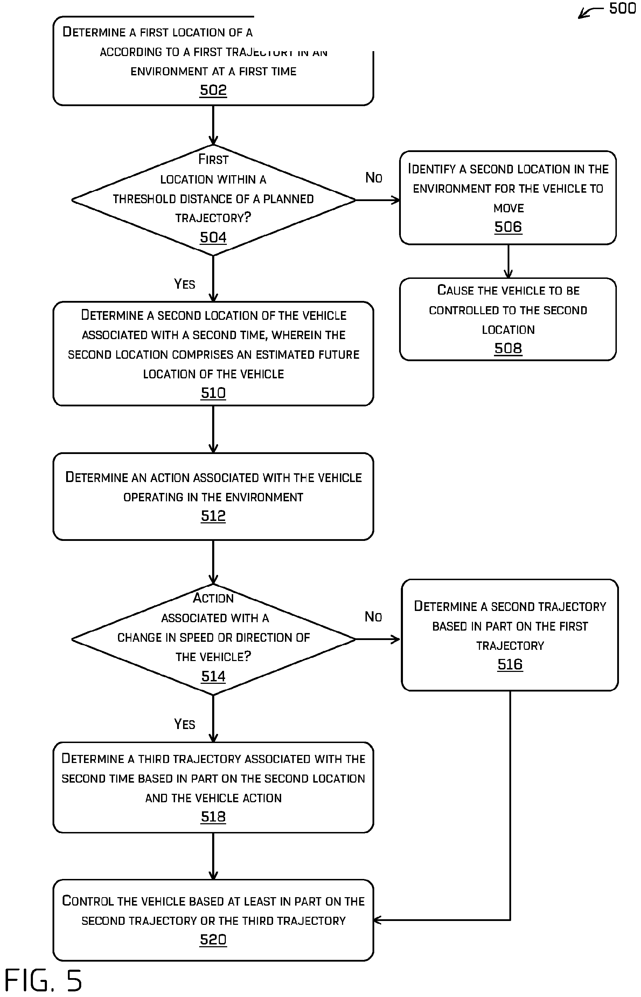

FIG. 5 depicts an example process 500 for determining a trajectory for a vehicle to follow at a future time based on a vehicle action associated with vehicular operations in an environment. Some or all of the process 500 may be performed by one or more components in FIG. 3, as described herein. For example, some or all of the process 500 may be performed by the vehicle computing device(s) 304.

At operation 502, the process 500 includes determining a first location of a vehicle operating according to a first trajectory (e.g., first vehicle trajectory) in an environment at a first time. The vehicle computing system may determine the first location based on sensor data received from one or sensors. The sensor data may be indicative of a position and/or a movement of the vehicle in the environment. The sensor(s) may include cameras, motion detectors, lidar, radar, time of flight, or the like. The sensor(s) may be mounted on the vehicle and/or may include sensor(s) that are remote to the vehicle (e.g., mounted on other vehicles, mounted in the environment, etc.).

At operation 504, the process 500 includes determining whether the first location is within a threshold distance of a planned trajectory of the vehicle. The planned trajectory may include a previously determined trajectory associated with vehicular operation in the environment. As discussed above, the planned trajectory may be determined by a planner component of the vehicle computing system, such as at a previous time interval. In various examples, the threshold distance (e.g., 1 foot, 0.5 meters, etc.) may represent a safety constraint to ensure that the vehicle operates within a pre-determined safety parameter.

Based on a determination that the first location is not within the threshold distance ("No" at operation 504), the process 500, at operation 506, includes identifying a second location in the environment for the vehicle to move. The threshold distance exceedance may represent a deviation from the planned trajectory that exceeds the pre-determined safety parameter. The second location may include a safe location for the vehicle to move, such as out of a flow of traffic. In various examples, the second location may include a parking location for the vehicle to cease operation.

At operation 508, the process 500 includes causing the vehicle to be controlled to the second location. In some examples, the vehicle computing system may determine a new trajectory associated with controlling the vehicle to the second location. In such examples, the vehicle computing system may control the vehicle according to the new trajectory. In some examples, the vehicle computing system may establish a connection with a remote operator, such as via one or more networks. In response to establishing the connection, the vehicle computing system may enable the remote operator to control the vehicle to the second location or another location associated with ceased vehicular operations. In at least one example, the remote operator may control the vehicle to the safe location to ensure safety of the vehicle and other objects operating in the environment while the vehicle computing system and/or a remote computing system performs troubleshooting operations to determine a cause to the deviation from the planned path.

Based on a determination that the first location is within the threshold distance ("Yes" at operation 504), the process 500, at operation 510, includes determining a second location of the vehicle associated with a second time, wherein the second location includes an estimated future location of the vehicle. The second location may include a lateral coordinate and a longitudinal coordinate (e.g., X-Y coordinates). The lateral coordinate of the second location includes a lateral position of the vehicle at the second (future) time. In some examples, the vehicle computing system determines the lateral coordinate of the second location based on the planned trajectory. In some examples, the lateral coordinate may be the same or substantially the same as a lateral coordinate associated with the planned trajectory (e.g., an X-coordinate of the planned trajectory) at the time in the future (e.g., less than 2% difference, within 5 centimeters, etc.). In some examples, the lateral coordinate may be within a threshold lateral distance from the planned trajectory (e.g., within 10 centimeters, 3 inches, etc.). As such, in at least one example, the vehicle computing system may be configured to constrain the lateral coordinate of the second location to the lateral confines of the planned trajectory.

In various examples, the vehicle computing system may determine a longitudinal coordinate of the second location based on a trajectory associated with the first time (e.g., the first trajectory). In some examples, the vehicle computing system may be configured to determine vehicle trajectories at a rate (e.g., every 50 milliseconds, 100 milliseconds, etc.), such as to provide a continuous trajectory and ensure a smooth ride for passengers of the vehicle. In such examples, the vehicle computing system determines the longitudinal coordinate based on a current trajectory associated with the vehicle while determining an updated trajectory associated with a second, future time.

In some examples, a time interval between the first time and the second time is determined based at last in part on the rate associated with determining vehicle trajectories. Additionally, in some examples, the time interval may be determined based on a time delay associated with an actuation of a vehicle component (e.g., drive system component). In such examples, the vehicle computing system may be configured to account for delays associated with actuation of drive system components, such as to provide a more accurate, continuous trajectory and ensure a smooth ride for the passengers.

At operation 512, the process 500 includes determining an action associated with the vehicle operating in the environment. The action can include an action determined by the vehicle computing system (e.g., planner component 118) based on conditions in the environment (e.g., rules of the road, detected objects, etc.). As non-limiting examples, the action may include maintaining a velocity to traverse the environment, stopping at a stop sign, accelerating from a stopped position at an intersection, slowing to yield to another vehicle, and the like.

In at least one example, the vehicle computing system may determine the action based on a detected object in the environment, such as to control the vehicle based on the object. The object may include a pedestrian, a bicyclist, a motorcycle, another vehicle, or the like. In some examples, the vehicle computing system may be configured to detect an object in the environment and determine that the object is relevant to the vehicle. In such examples, the vehicle computing system may determine the action based on the relevant object. In some examples, the vehicle computing system may determine object relevance utilizing techniques such as those described in U.S. Patent Application Serial Numbers 16/389,720, and/or 16/417,260. In some examples, a determination of object relevance may be based on a predicted object trajectory associated therewith. In such examples, the vehicle computing system (e.g., a prediction component associated therewith) may be configured to determine the predicted object trajectory and/or relevance of the object associated therewith. In some examples, the vehicle computing system may determine the predicted object trajectory utilizing techniques such as those described in U.S. Patent Application Serial Numbers 15/807,521, 16/151,607, and 16/504,147.

At operation 514, the process 500 includes determining whether the action is associated with a change in speed or direction of the vehicle. The change in speed of the vehicle can include an acceleration or deceleration (e.g., negative acceleration). For example, the action may include an acceleration from a stop sign into an intersection. For another example, the action may include a deceleration, slowing to yield to another vehicle. The change in direction may include a turning action, a lane change, or the like. For example, the action may include a lane change action that includes a change to a direction of movement of the vehicle.

Based on a determination that the action is not associated with the change in speed or direction of the vehicle ("No" at operation 514), the process 500, at operation 516, includes determining a second trajectory based in part on the first trajectory. In various examples, the first trajectory and the second trajectory may be the same or substantially the same. In some examples, the second trajectory may include a modification to a direction of travel associated with the first trajectory.

Based on a determination that the action is associated with the change in speed or direction of the vehicle ("Yes" at operation 514), the process 500, at operation 518 includes determining a third trajectory associated with the second time based in part on the second location and the vehicle action. In some examples, the third trajectory may additionally be determined based on the first trajectory.

At operation 520, the process 500 includes controlling the vehicle based at least in part on the second trajectory (determined at operation 516) or the third trajectory. In various examples, the vehicle computing system may identify one or more drive system components associated with the second trajectory or the third trajectory. In some examples, the vehicle computing system may generate one or more control signals to actuate the drive system component(s). In some examples, the vehicle computing system may send the control signals at the second time, such as to initiate the modification of the first trajectory to the second trajectory or the third trajectory at the second time. According to the invention, the vehicle computing system determines a delay associated with the drive system component(s) (e.g., actuation delay). In such examples, the vehicle computing system may send the signal at a time prior to the second time based at least in part on the delay associated with the drive system component(s), such as to cause the drive system component(s) to actuate at about the second time.

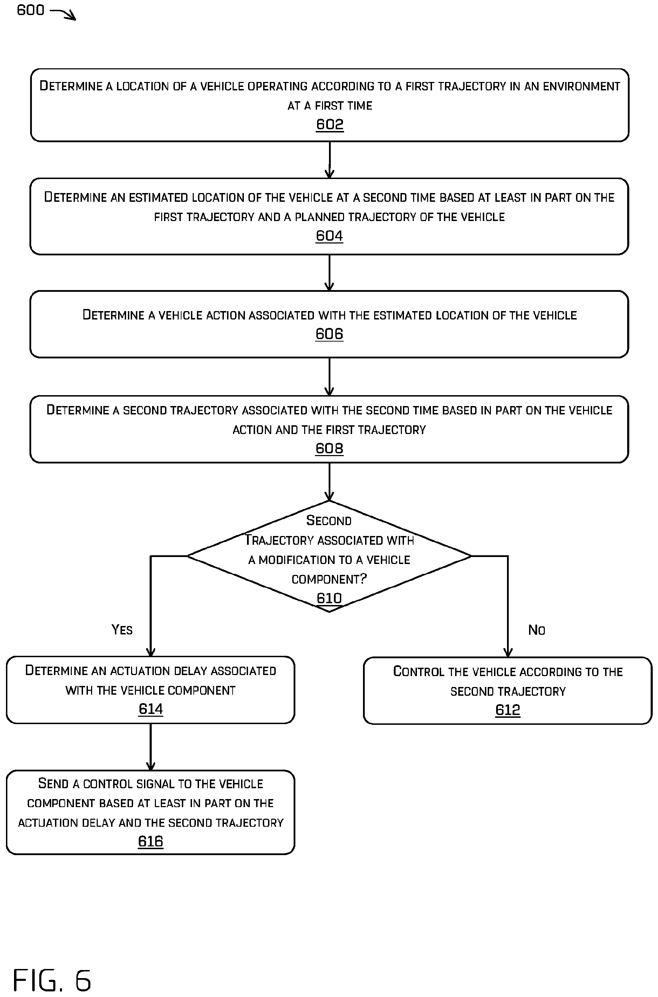

FIG. 6 depicts an example process 600 for sending a control signal associated with a vehicle trajectory based on an actuation delay associated with a corresponding vehicle component. Some or all of the process 600 may be performed by one or more components in FIG. 3, as described herein. For example, some or all of the process 600 may be performed by the vehicle computing device(s) 304.

At operation 602, the process 600 includes determining a location of a vehicle operating according to a first trajectory (e.g., first vehicle trajectory) in an environment at a first time. The vehicle computing system may determine the location based on sensor data received from one or sensors. The sensor data may be indicative of a position and/or a movement of the vehicle in the environment. The sensor(s) may include cameras, motion detectors, lidar, radar, time of flight, or the like. The sensor(s) may be mounted on the vehicle and/or may include sensor(s) that are remote to the vehicle (e.g., mounted on other vehicles, mounted in the environment, etc.).

At operation 604, the process 600 includes determining an estimated location of the vehicle at a second time based at least in part on the first trajectory and a planned trajectory of the vehicle. The estimated location may include a lateral coordinate and a longitudinal coordinate (e.g., X-Y coordinates). The lateral coordinate of the estimated location includes a lateral position of the vehicle at the second (future) time. In some examples, the vehicle computing system determines the lateral coordinate of the estimated location based on the planned trajectory. In some examples, the lateral coordinate may be the same or substantially the same as a lateral coordinate associated with the planned trajectory (e.g., an X-coordinate of the planned trajectory) at the time in the future (e.g., less than 2% difference, within 5 centimeters, etc.). In some examples, the lateral coordinate may be within a threshold lateral distance from the planned trajectory (e.g., within 10 centimeters, 3 inches, etc.). As such, in at least one example, the vehicle computing system may be configured to constrain the lateral coordinate of the second location to the lateral confines of the planned trajectory.

In various examples, the vehicle computing system may determine a longitudinal coordinate of the estimated location based on a vehicle trajectory associated with the first time (e.g., the first trajectory). In some examples, the vehicle computing system may be configured to determine vehicle trajectories at a rate (e.g., every 50 milliseconds, 100 milliseconds, etc.), such as to provide a continuous trajectory and ensure a smooth ride for passengers of the vehicle. In such examples, the vehicle computing system determines the longitudinal coordinate based on a current trajectory associated with the vehicle operating at the first time while determining an updated trajectory associated with a second, future time.

In some examples, a time interval between the first time and the second time is determined based at last in part on the rate associated with determining vehicle trajectories. Additionally, in some examples, the time interval may be determined based on a time delay associated with an actuation of a vehicle component (e.g., drive system component). In such examples, the vehicle computing system may be configured to account for delays associated with actuation of drive system components, such as to provide a more accurate, continuous trajectory and ensure a smooth ride for the passengers.

At operation 606, the process 600 includes determining a vehicle action associated with the estimated location. The action may include an action that the vehicle will perform at the estimated location and/or at the second time associated therewith. The action can include an action determined by the vehicle computing system (e.g., planner component 118) based on conditions in the environment (e.g., rules of the road, detected objects, etc.) and/or based on detected objects in the environment. As non-limiting examples, the action may include maintaining a velocity to traverse the environment, stopping at a stop sign, accelerating from a stopped position at an intersection, slowing to yield to another vehicle. and the like.

At operation 608, the process 600 includes determining a second trajectory associated with the second time based in part on the vehicle action and the first trajectory. In various examples, the second trajectory may have associated therewith one or more speeds and/or directions of travel. In such examples, the vehicle computing system may determine the one or more speeds and/or directions of travel associated with the second trajectory. In examples in which the vehicle action includes a change of speed and/or direction of travel, the vehicle computing system may determine the second trajectory utilizing one or more first speeds associated with the first trajectory. In examples in which the vehicle action include change in direction of travel, the vehicle computing system may determine the second trajectory utilizing one or more first directions of travel associated with the first trajectory.

At operation 610, the process 600 includes determining whether the second trajectory is associated with a modification to a vehicle component. In some examples, the vehicle component may include a drive system component, as discussed above. In some examples, the drive system component may include a motor, engine, transmission, steering system components, braking system components, and the like. In various examples, the vehicle computing system may determine the modification to the vehicle component based on a change in speed and/or direction of travel between the first trajectory and the second trajectory.

Based on a determination that the second trajectory is not associated with a modification to the vehicle component ("No" at operation 610), the process 600, at operation 612, includes controlling the vehicle according to the second trajectory. As such, the vehicle computing system may cause the vehicle to travel according to the second trajectory at the second time.

Based on a determination that the second trajectory is associated with a modification to the vehicle component ("Yes" at operation 610), the process 600, at operation 614, includes determining an actuation delay associated with the vehicle component. In some examples, the modification may include a modification to two or more vehicle components. In some examples, the actuation delay may include an average actuation delay associated with the two or more vehicle components. In some examples, the actuation delay may include a maximum or a minimum delay associated with actuation of a vehicle component of the two or more components. In some examples, the actuation delay may include a pre-determined delay associated with one or more drive system components (e.g., vehicle components).

At operation 616, the process 600, includes sending a control signal to the vehicle component based at least in part on the actuation delay and the second trajectory. In some examples, the control signal may cause the vehicle component to actuate, such as to cause the vehicle to travel according to the second trajectory at the second time.

### CONCLUSION

While one or more examples of the techniques described herein have been described, various alterations, additions and permutations thereof are possible according to the appended claims.

In the description of examples, reference is made to the accompanying drawings that form a part hereof, which show by way of illustration specific examples of the claimed subject matter. It is to be understood that other examples can be used and that changes or alterations, such as structural changes, can be made, according to the appended claims.

## Claims

1. A system comprising:
a sensor;
one or more processors; and
one or more non-transitory computer-readable media storing instructions executable by the one or more processors, wherein the instructions, when executed, cause the system to perform operations comprising:
receiving a first vehicle trajectory (120(1));
determining, based at least in part on sensor data from the sensor, a first location of a vehicle (102) operating in an environment (100) at a first time;
determining a first projected location of the first location mapped onto the first vehicle trajectory;
determining, based at least in part in the first projected location and the first vehicle trajectory, a second location of the vehicle at a second time after the first time, the second location comprising an estimated future location of the vehicle,
wherein the second location comprises:
a lateral coordinate that is constrained to the first vehicle trajectory; and
a longitudinal coordinate determined based at least in part on a speed associated with the first vehicle trajectory;
determining an action associated with the vehicle operating in the environment;
determining an actuation delay corresponding to a vehicle component associated with controlling the vehicle;
determining, based at least in part on the second location, the actuation delay, and the action, a second vehicle trajectory (120(2)) associated with the vehicle operating at the second time; and
controlling the vehicle based at least in part on the second vehicle trajectory at the second time.

2. The system of claim 1, further comprising:
determining that a distance from the first location of the vehicle (102) to the first vehicle trajectory (120(1)) is less than or equal to a threshold distance (128),
wherein determining the second location of the vehicle is based at least in part on determining that the distance is less than or equal to the threshold distance.

3. The system of any one of claims 1 or 2, further comprising:
determining a third location of the vehicle (102) at the second time, wherein the third location of the vehicle comprises an actual location of the vehicle at the second time;
determining that a distance between the third location and the first vehicle trajectory (120(1)) exceeds a threshold distance (128);
identifying, based at least in part on the distance exceeding the threshold distance, a fourth location in the environment for the vehicle to move to, the fourth location being associated with a parked location;
determining a third trajectory associated with the vehicle operating to the fourth location; and
controlling the vehicle according to the third trajectory.

4. The system of any one of claims 1-3, wherein the second time is based at least in part on at least one of:
a first time interval associated with calculating vehicle trajectories; or
a second time interval associated with the actuation delay corresponding to a vehicle component associated with controlling the vehicle (102).

5. The system of any one of claims 1-4, further comprising:
sending a signal to actuate the vehicle component based at least in part on the actuation delay.

6. A method comprising:
determining, based at least in part in a current location of a vehicle (102) operating in an environment (100) at a first time, an estimated location of the vehicle at a future time after the first time, the estimated location comprising:
a lateral coordinate that is based at least in part on a first vehicle trajectory (120(1)) associated with the vehicle operating in the environment and a projected location of the current location onto the first vehicle trajectory; and
a longitudinal coordinate determined based at least in part on a speed associated with the first vehicle trajectory;
determining an actuation delay corresponding to a vehicle component associated with controlling the vehicle; and
determining, based at least in part on the estimated location, the actuation delay, and the speed, a second vehicle trajectory (120(2)) associated with the vehicle operating at the future time.

7. The method of claim 6, further comprising:
determining that a distance from the current location to the first vehicle trajectory (120(1)) is less than or equal to a threshold distance (128),
wherein determining the estimated location of the vehicle (102) is based at least in part on determining that the distance is less than or equal to the threshold distance.

8. The method of any one of claims 6-7, further comprising:
determining a measured location of the vehicle (102) at the future time;
determining that a distance between the measured location and the first vehicle trajectory (120(1)) exceeds a threshold distance (128); and
determining, based at least in part on the distance exceeding the threshold distance, to cause the vehicle to move to a parking location.

9. The method of claim 8, wherein causing the vehicle (102) to move to the parking location comprises at least one of:
controlling the vehicle based at least in part on a third trajectory associated with the vehicle operating to the parking location; or
controlling the vehicle based at least in part on a control input received from a remote operator.

10. The method of any one of claims 6-9, wherein the future time is based at least in part on at least one of:
a first time interval associated with calculating vehicle trajectories; or
a second time interval associated with the actuation delay corresponding to a vehicle component associated with controlling the vehicle (102).

11. The method of any one of claims 6-10, further comprising:
determining an action associated with the vehicle (102) operating in the environment (100); and
determining a speed associated with the action,
wherein the second vehicle trajectory (120(2)) is determined based at least in part on the speed.

12. The method of any one of claims 6-11, further comprising:
determining an object (104) operating in the environment (100); and
determining an action for the vehicle (102) to perform based at least in part on the object,
wherein determining the second vehicle trajectory (120(2)) is further based at least in part on the action.

13. The method of any one of claims 6-12, further comprising controlling the vehicle (102), at the future time, based at least in part on the second vehicle trajectory (120(2)).

14. One or more non-transitory computer-readable media storing instructions that, when executed, cause one or more processors to perform the method of any one of claims 6-13.

## Patentansprüche

1. System, umfassend:
einen Sensor;
einen oder mehrere Prozessoren; und
ein oder mehrere nichtflüchtige computerlesbare Medien, die Anweisungen speichern, die durch den einen oder die mehreren Prozessoren ausführbar sind, wobei die Anweisungen, wenn sie ausgeführt werden, das System veranlassen, Operationen durchzuführen, die Folgendes umfassen:
Empfangen einer ersten Fahrzeugtrajektorie (120(1));
Bestimmen - wenigstens zum Teil basierend auf Sensordaten von dem Sensor - eines ersten Standorts eines Fahrzeugs (102), das in einer Umgebung (100) in Betrieb ist, zu einer ersten Zeit;
Bestimmen eines ersten projizierten Standorts des ersten Standorts, der auf der ersten Fahrzeugtrajektorie abgebildet ist;
Bestimmen - wenigstens zum Teil basierend auf dem ersten projizierten Standort und der ersten Fahrzeugtrajektorie - eines zweiten Standorts des Fahrzeugs zu einer zweiten Zeit nach der ersten Zeit, wobei der zweite Standort einen geschätzten zukünftigen Standort des Fahrzeugs umfasst,
wobei der zweite Standort Folgendes umfasst:
eine laterale Koordinate, die auf die erste Fahrzeugtrajektorie beschränkt ist; und
eine longitudinale Koordinate, die wenigstens zum Teil basierend auf einer Geschwindigkeit, die der ersten Fahrzeugtrajektorie zugeordnet ist, bestimmt wird;
Bestimmen einer Maßnahme, die dem In-Betrieb-Sein des Fahrzeugs in der Umgebung zugeordnet ist;
Bestimmen einer Betätigungsverzögerung, die einer dem Steuern des Fahrzeugs zugeordneten Fahrzeugkomponente entspricht;
Bestimmen - wenigstens zum Teil basierend auf dem zweiten Standort, der Betätigungsverzögerung und der Maßnahme - einer zweiten Fahrzeugtrajektorie (120(2)), die dem In-Betrieb-Sein des Fahrzeugs zu der zweiten Zeit zugeordnet ist; und
Steuern des Fahrzeugs wenigstens zum Teil basierend auf der zweiten Fahrzeugtrajektorie zu der zweiten Zeit.

2. System nach Anspruch 1, ferner umfassend:
Bestimmen, dass eine Entfernung von dem ersten Standort des Fahrzeugs (102) zu der ersten Fahrzeugtrajektorie (120(1)) kleiner als oder gleich ein(em) Entfernungsschwellenwert (128) ist,
wobei das Bestimmen des zweiten Standorts des Fahrzeugs wenigstens zum Teil auf dem Bestimmen, dass die Entfernung kleiner als oder gleich der/m Entfernungsschwellenwert ist, basiert.

3. System nach einem der Ansprüche 1 oder 2, ferner umfassend:
Bestimmen eines dritten Standorts des Fahrzeugs (102) zu der zweiten Zeit, wobei der dritte Standort des Fahrzeugs einen tatsächlichen Standort des Fahrzeugs zu der zweiten Zeit umfasst;
Bestimmen, dass eine Entfernung zwischen dem dritten Standort und der ersten Fahrzeugtrajektorie (120(1)) einen Entfernungsschwellenwert (128) übersteigt;
Ermitteln - wenigstens zum Teil darauf basierend, dass die Entfernung den Entfernungsschwellenwert übersteigt - eines vierten Standorts in der Umgebung, zu dem das Fahrzeug sich bewegen soll, wobei der vierte Standort einem Parkstandort zugeordnet ist;
Bestimmen einer dritten Trajektorie, die dem In-Betrieb-Sein des Fahrzeugs hin zu dem vierten Standort zugeordnet ist; und
Steuern des Fahrzeugs gemäß der dritten Trajektorie.

4. System nach einem der Ansprüche 1-3, wobei die zweite Zeit wenigstens zum Teil auf wenigstens einem der Folgenden basiert:
einem ersten Zeitintervall, das dem Berechnen von Fahrzeugtrajektorien zugeordnet ist; oder
einem zweiten Zeitintervall, das der Betätigungsverzögerung, die einer dem Steuern des Fahrzeugs (102) zugeordneten Fahrzeugkomponente entspricht, zugeordnet ist.

5. System nach einem der Ansprüche 1-4, ferner umfassend:
Senden eines Signals zum Betätigen der Fahrzeugkomponente wenigstens zum Teil basierend auf der Betätigungsverzögerung.

6. Verfahren, umfassend:
Bestimmen - wenigstens zum Teil basierend auf einem aktuellen Standort eines Fahrzeugs (102), das in einer Umgebung (100) in Betrieb ist, zu einer ersten Zeit - eines geschätzten Standorts des Fahrzeugs zu einer zukünftigen Zeit nach der ersten Zeit, wobei der geschätzte Standort Folgendes umfasst:
eine laterale Koordinate, die wenigstens zum Teil auf einer ersten Fahrzeugtrajektorie (120(1)), die dem In-Betrieb-Sein des Fahrzeugs in der Umgebung zugeordnet ist, und einem projizierten Standort des aktuellen Standorts auf die erste Fahrzeugtrajektorie basiert; und eine longitudinale Koordinate, die wenigstens zum Teil basierend auf einer Geschwindigkeit, die der ersten Fahrzeugtrajektorie zugeordnet ist, bestimmt wird;
Bestimmen einer Betätigungsverzögerung, die einer dem Steuern des Fahrzeugs zugeordneten Fahrzeugkomponente entspricht; und
Bestimmen - wenigstens zum Teil basierend auf dem geschätzten Standort, der Betätigungsverzögerung und der Geschwindigkeit - einer zweiten Fahrzeugtrajektorie (120(2)), die dem In-Betrieb-Sein des Fahrzeugs zu der zukünftigen Zeit zugeordnet ist.

7. Verfahren nach Anspruch 6, ferner umfassend:
Bestimmen, dass eine Entfernung von dem aktuellen Standort zu der ersten Fahrzeugtrajektorie (120(1)) kleiner als oder gleich ein(em) Entfernungsschwellenwert (128) ist,
wobei das Bestimmen des geschätzten Standorts des Fahrzeugs (102) wenigstens zum Teil auf dem Bestimmen, dass die Entfernung kleiner als oder gleich der/m Entfernungsschwellenwert ist, basiert.

8. Verfahren nach einem der Ansprüche 6-7, ferner umfassend:
Bestimmen eines gemessenen Standorts des Fahrzeugs (102) zu der zukünftigen Zeit;
Bestimmen, dass eine Entfernung zwischen dem gemessenen Standort und der ersten Fahrzeugtrajektorie (120(1)) einen Entfernungsschwellenwert (128) übersteigt; und
Bestimmen - wenigstens zum Teil darauf basierend, dass die Entfernung den Entfernungsschwellenwert übersteigt - , das Fahrzeug zu veranlassen, sich zu einem Parkstandort zu bewegen.

9. Verfahren nach Anspruch 8, wobei das Veranlassen des Fahrzeugs (102), sich zu dem Parkstandort zu bewegen, wenigstens eines der Folgenden umfasst:
Steuern des Fahrzeugs wenigstens zum Teil basierend auf einer dritten Trajektorie, die dem In-Betrieb-Sein des Fahrzeugs hin zu dem Parkstandort zugeordnet ist; oder
Steuern des Fahrzeugs wenigstens zum Teil basierend auf einer Steuereingabe, die von einer entfernt befindlichen Bedienperson empfangen wird.

10. Verfahren nach einem der Ansprüche 6-9, wobei die zukünftige Zeit wenigstens zum Teil auf wenigstens einem der Folgenden basiert:
einem ersten Zeitintervall, das dem Berechnen von Fahrzeugtrajektorien zugeordnet ist; oder
einem zweiten Zeitintervall, das der Betätigungsverzögerung, die einer dem Steuern des Fahrzeugs (102) zugeordneten Fahrzeugkomponente entspricht, zugeordnet ist.

11. Verfahren nach einem der Ansprüche 6-10, ferner umfassend:
Bestimmen einer Maßnahme, die dem In-Betrieb-Sein des Fahrzeugs (102) in der Umgebung (100) zugeordnet ist; und
Bestimmen einer Geschwindigkeit, die der Maßnahme zugeordnet ist,
wobei die zweite Fahrzeugtrajektorie (120(2)) wenigstens zum Teil basierend auf der Geschwindigkeit bestimmt wird.

12. Verfahren nach einem der Ansprüche 6-11, ferner umfassend:
Bestimmen eines Objekts (104), das in der Umgebung (100) in Betrieb ist; und
Bestimmen einer Maßnahme, die das Fahrzeug (102) durchführen soll, wenigstens zum Teil basierend auf dem Objekt,
wobei das Bestimmen der zweiten Fahrzeugtrajektorie (120(2)) ferner wenigstens zum Teil auf der Maßnahme basiert.

13. Verfahren nach einem der Ansprüche 6-12, das ferner das Steuern des Fahrzeugs (102) zu der zukünftigen Zeit wenigstens zum Teil basierend auf der zweiten Fahrzeugtrajektorie (120(2)) umfasst.

14. Ein oder mehrere nichtflüchtige computerlesbare Medien, die Anweisungen speichern, die, wenn sie ausgeführt werden, einen oder mehrere Prozessoren veranlassen, das Verfahren nach einem der Ansprüche 6-13 durchzuführen.

## Revendications

1. Système comprenant :
un capteur ;
un ou plusieurs processeurs ; et
un ou plusieurs supports non transitoires lisibles par ordinateur stockant des instructions exécutables par les un ou plusieurs processeurs, dans lequel les instructions, lorsqu'elles sont exécutées, amènent le système à réaliser des opérations comprenant :
la réception d'une première trajectoire de véhicule (120(1)) ;
la détermination, sur la base au moins en partie de données de capteur provenant du capteur, d'un premier emplacement d'un véhicule (102) fonctionnant dans un environnement (100) à un premier moment ;
la détermination d'un premier emplacement projeté du premier emplacement cartographié sur la première trajectoire de véhicule ;
la détermination, sur la base au moins en partie du premier emplacement projeté et de la première trajectoire de véhicule, d'un second emplacement du véhicule à un second moment après le premier moment, le second emplacement comprenant un emplacement futur estimé du véhicule,
dans lequel le second emplacement comprend :
une coordonnée latérale qui est limitée à la première trajectoire de véhicule ; et
une coordonnée longitudinale déterminée sur la base au moins en partie d'une vitesse associée à la première trajectoire de véhicule ;
la détermination d'une action associée au véhicule fonctionnant dans l'environnement;
la détermination d'un retard d'actionnement correspondant à un composant de véhicule associé à la commande du véhicule ;
la détermination, sur la base au moins en partie du second emplacement, du retard d'actionnement et de l'action, d'une seconde trajectoire de véhicule (120(2)) associée au véhicule fonctionnant au second moment ; et
la commande du véhicule sur la base au moins en partie de la seconde trajectoire de véhicule au second moment.

2. Système selon la revendication 1, comprenant en outre :
la détermination du fait qu'une distance entre le premier emplacement du véhicule (102) et la première trajectoire de véhicule (120(1)) est inférieure ou égale à une distance seuil (128),
dans lequel la détermination du second emplacement du véhicule est basée au moins en partie sur la détermination du fait que la distance est inférieure ou égale à la distance seuil.

3. Système selon l'une quelconque des revendications 1 ou 2, comprenant en outre :
la détermination d'un troisième emplacement du véhicule (102) au second moment, dans lequel le troisième emplacement du véhicule comprend un emplacement réel du véhicule au second moment ;
la détermination du fait qu'une distance entre le troisième emplacement et la première trajectoire de véhicule (120(1)) dépasse une distance seuil (128) ;
l'identification, sur la base au moins en partie de la distance dépassant la distance seuil, d'un quatrième emplacement dans l'environnement vers lequel le véhicule doit se déplacer, le quatrième emplacement étant associé à un emplacement de stationnement ;
la détermination d'une troisième trajectoire associée au véhicule se dirigeant vers le quatrième emplacement ; et
la commande du véhicule selon la troisième trajectoire.

4. Système selon l'une quelconque des revendications 1 à 3, dans lequel le second moment est basé au moins en partie sur au moins un élément parmi :
un premier intervalle de temps associé au calcul de trajectoires du véhicule ; ou
un second intervalle de temps associé au retard d'actionnement correspondant à un composant de véhicule associé à la commande du véhicule (102).

5. Système selon l'une quelconque des revendications 1 à 4, comprenant en outre :
l'envoi d'un signal pour actionner le composant de véhicule sur la base au moins en partie du retard d'actionnement.

6. Procédé comprenant :
la détermination, sur la base au moins en partie d'un emplacement actuel d'un véhicule (102) fonctionnant dans un environnement (100) à un premier moment, d'un emplacement estimé du véhicule à un moment futur après le premier moment, l'emplacement estimé comprenant :
une coordonnée latérale qui est basée au moins en partie sur une première trajectoire de véhicule (120(1)) associée au véhicule fonctionnant dans l'environnement et un emplacement projeté de l'emplacement actuel sur la première trajectoire de véhicule ; et
une coordonnée longitudinale déterminée sur la base au moins en partie d'une vitesse associée à la première trajectoire de véhicule ;
la détermination d'un retard d'actionnement correspondant à un composant de véhicule associé à la commande du véhicule ; et
la détermination, sur la base au moins en partie de l'emplacement estimé, du retard d'actionnement et de la vitesse, d'une seconde trajectoire de véhicule (120(2)) associée au véhicule fonctionnant au moment futur.

7. Procédé selon la revendication 6, comprenant en outre :
la détermination du fait qu'une distance entre l'emplacement actuel et la première trajectoire de véhicule (120(1)) est inférieure ou égale à une distance seuil (128),
dans lequel la détermination de l'emplacement estimé du véhicule (102) est basée au moins en partie sur la détermination du fait que la distance est inférieure ou égale à la distance seuil.

8. Procédé selon l'une quelconque des revendications 6 à 7, comprenant en outre :
la détermination d'un emplacement mesuré du véhicule (102) au moment futur ;
la détermination du fait qu'une distance entre l'emplacement mesuré et la première trajectoire de véhicule (120(1)) dépasse une distance seuil (128) ; et
la détermination, sur la base au moins en partie de la distance dépassant la distance seuil, du fait d'amener le véhicule à se déplacer vers un emplacement de stationnement.

9. Procédé selon la revendication 8, dans lequel le fait d'amener le véhicule (102) à se déplacer vers l'emplacement de stationnement comprend au moins un élément parmi :
la commande du véhicule sur la base au moins en partie d'une troisième trajectoire associée au véhicule se dirigeant vers l'emplacement de stationnement ; ou
la commande du véhicule sur la base au moins en partie d'une entrée de commande reçue en provenance d'un opérateur à distance.

10. Procédé selon l'une quelconque des revendications 6 à 9, dans lequel le moment futur est basé au moins en partie sur au moins un élément parmi :
un premier intervalle de temps associé au calcul de trajectoires du véhicule ; ou
un second intervalle de temps associé au retard d'actionnement correspondant à un composant de véhicule associé à la commande du véhicule (102).

11. Procédé selon l'une quelconque des revendications 6 à 10, comprenant en outre :
la détermination d'une action associée au véhicule (102) fonctionnant dans l'environnement (100) ; et
la détermination d'une vitesse associée à l'action,
dans lequel la seconde trajectoire de véhicule (120(2)) est déterminée sur la base au moins en partie de la vitesse.

12. Procédé selon l'une quelconque des revendications 6 à 11, comprenant en outre :
la détermination d'un objet (104) fonctionnant dans l'environnement (100) ; et
la détermination d'une action que le véhicule (102) doit réaliser sur la base au moins en partie de l'objet,
dans lequel la détermination de la seconde trajectoire de véhicule (120(2)) est en outre basée au moins en partie sur l'action.

13. Procédé selon l'une quelconque des revendications 6 à 12, comprenant en outre la commande du véhicule (102), au moment futur, sur la base au moins en partie de la seconde trajectoire de véhicule (120(2)).

14. Support ou supports non transitoires lisibles par ordinateur stockant des instructions qui, lorsqu'elles sont exécutées, amènent un ou plusieurs processeurs à réaliser le procédé selon l'une quelconque des revendications 6 à 13.
